# EUROPEAN PATENT SPECIFICATION

(11) **EP 3 812 021 B1**
(45) Date of publication and mention of the grant of the patent: **22.04.2026**
(21) Application number: 18924054.2
(22) Date of filing: 29.11.2018
(51) Int. Cl.: G09F 19/22, G06Q 90/00, G09F 13/00, G09F 19/12, G09F 21/02, G09F 27/00, A63H 33/22, A63H 37/00

(54) **METHOD FOR DIRECTING PERFORMANCE IN THEATER BY USING LIGHT-EMITTING DEVICES FOR CHEERING AND PERFORMANCE DIRECTING SYSTEM USING SAME**
VERFAHREN ZUM LEITEN VON AUFFÜHRUNGEN IM THEATER UNTER VERWENDUNG VON LICHTEMITTIERENDEN VORRICHTUNGEN FÜR BEIFALL SOWIE AUFFÜHRUNGSLEITUNGSSYSTEM DAMIT
PROCÉDÉ DESTINÉ À DIRIGER UNE PERFORMANCE DANS UN THÉÂTRE À L'AIDE DE DISPOSITIFS ÉLECTROLUMINESCENTS DESTINÉS À DES OVATIONS ET SYSTÈME DE DIRECTION DE PERFORMANCE UTILISANT CE DERNIER

(30) Priority: 25.06.2018 KR 20180072860
(43) Date of publication of application: 28.04.2021
(73) Proprietor: Fanlight Co., Ltd., Uiwang-si, Gyeonggi-do 16071 (KR)
(72) Inventor: CHOI, Kyung Il, Seoul 06011 (KR); CHOI, Jung Min, Seoul 06011 (KR)
(74) Representative: Manitz Finsterwald Patent- und Rechtsanwaltspartnerschaft mbB
(86) International application number: PCT/KR2018/014929
(87) International publication number: WO 2020/004735

(56) References cited:
- EP-A1- 3 211 971
- JP-A- 2016 108 287
- KR-A- 20140 112 805
- KR-A- 20160 015 032
- KR-A- 20180 015 702
- KR-B1- 101 862 689
- US-A1- 2014 184 386
- US-A1- 2015 012 308

## Description

### BACKGROUND

Embodiments of the inventive concept described herein relate to a method for controlling group-performance in a sports or performance venue using a cheering light-emitting device and a group-performance presentation system using the same.

In general, an illumination device refers to a light-emission device that reflects, refracts, and transmits light from a light source to achieve a purpose of illumination. The illumination device may be classified into an indirect illumination device, an semi-indirect illumination device, a general diffusion device, a semi-direct illumination device, and a direct illumination device depending on light distribution.

Due to technological advances, the illumination devices have been used for a variety of applications. For example, the illumination device is used to present a media facade. The media facade refers to implementing a media function by installing the illumination device on an outer wall of a building.

In another example, the illumination device may be used as a small cheering device in a sports event or a concert conducted under an environment below a certain illuminance. However, in such an environment, there are aspects in which it is difficult to create a systematic illumination pattern or shape because a plurality of illumination devices are individually controlled. Further, only using a light source positioned in the illumination device may not lead to a satisfactory cheering effect.

Accordingly, in order to solve the above problem, it is required to introduce a variety of group-performance presentations in sports or performance venues such as sports stadiums and concert halls by collectively controlling a plurality of illumination devices.

EP 3211971 A discloses an emission control system and mater and slave devices for the emission control system. The master device controlling one or more slave devices. US 2014 184 386 A1 provides a wristband includes an RF receiver arranged to receive targeted data burst which causes selective illumination of the light emitting device(s) within wristbands worn by the audience to produce a light-show. US 2015 012 308 A1 discloses systems and methods supplement events to allow attendee participation as a portion of the event to provide visual and/or aural output using mobile devices.

### SUMMARY

Embodiments of the inventive concept provide a method for controlling group-performance in a sports or performance venue using a cheering light-emitting device and a group-performance presentation system using the same. The invention is set out in the appended set of claims.

Further, embodiments of the inventive concept provide a method and device for grouping cheering light-emitting devices in groups and for controlling the cheering light-emitting devices on a group basis.

The purposes to be achieved by the present disclosure are not limited to those mentioned above. Other purposes as not mentioned may be clearly understood by those skilled in the art from descriptions below.

It is disclosed a method for controlling seats-based group-performance in a sports or performance venue using a plurality of cheering light-emitting devices, the method comprising: grouping the plurality of cheering light-emitting devices corresponding to individual spectator or audience seats of the sports or performance venue such that cheering light-emitting devices rendering the same color for a specific group-performance presentation period belong to the same group, and assigning group identification information to the plurality of the cheering light-emitting devices; creating group-performance presentation mapping data including mapping between the group identification information and group light-emission color information rendered from a group corresponding to the group identification information for the specific group-performance presentation period; recording the group identification information of the group-performance presentation mapping data corresponding to spectator or audience seats position information obtained based on ticket information into the plurality of cheering light-emitting devices; during sports or performance processes, wirelessly broadcasting the group-performance presentation mapping data corresponding to the specific group-performance presentation period across the sports or performance venue; and selectively turning on or off the plurality of cheering light-emitting devices, based on the group light-emission color information corresponding to the group identification information recorded in each of the group-performance presentation mapping data received by the plurality of cheering light-emitting devices, thereby to present an image from the spectator or audience seats of the sports or performance venue for the specific group-performance presentation period.

According to one aspect, there is provided a method for controlling seats-based group-performance in a sports or performance venue using a plurality of cheering light-emitting devices, the method comprising: grouping, by an information processing device, the plurality of cheering light-emitting devices corresponding to individual spectator or audience seats of the sports or performance venue such that cheering light-emitting devices rendering the same color for a specific group-performance presentation period belong to the same group, and assigning, by an information processing device, group identification information to the plurality of the cheering light-emitting devices; and recording, by an information recording module of the information processing device, the group identification information corresponding to spectator or audience seats position information obtained based on ticket information into the plurality of cheering light-emitting devices, wherein the plurality of cheering light-emitting devices corresponding to individual spectator or audience seats of the sports or performance venue are selectively turned on or off, thereby to present an image from the spectator or audience seats of the sports or performance venue for a specific group-performance presentation period. The information processing device is carried by the spectator or audience together with a ticket and cheering light-emitting device who enters the venue.

In one embodiment, the method further includes: creating, by a control device, group-performance presentation mapping data including mapping between the group identification information and group light-emission color information rendered from the group corresponding to the group identification information for the specific group-performance presentation period; and during sports or performance processes, wirelessly broadcasting, by the control device, the group-performance presentation mapping data corresponding to the specific group-performance presentation period across the sports or performance venue.

In one embodiment, the method further includes: creating, by a control device, group-performance presentation mapping data including mapping between the group identification information and group light-emission color information rendered from the group corresponding to the group identification information for the specific group-performance presentation period; and turning on or off, by the control device, the plurality of cheering light-emitting devices based on the group light-emission color information corresponding to the group identification information contained in the group-performance presentation mapping data, thereby to present the image from the seats in the sports or performance venue.

It is disclosed a method of controlling seats-based group-performance in a sports or performance venue using a plurality of cheering light-emitting devices, wherein the devices are positioned in spectator or audience seats in the sports or performance venue, the method comprising: receiving, by the plurality of cheering light-emitting devices, a first control signal from a control device to present a first group-performance constituting scene from the seats; checking group identification information for the first group-performance constituting scene pre-stored in each of the plurality of cheering light-emitting devices; and rendering, by a first cheering light-emitting devices group among the plurality of cheering light-emitting devices, the same color based on the same group light-emission color information according to the first control signal, wherein the first cheering light-emitting devices group has the same group identification information for the first group-performance constituting scene; wherein the first control signal includes first pairs between a plurality of group identification information and a plurality of corresponding group light-emission color information to present the first group-performance constituting scene, wherein the first control signal further include light-emission state information for a second cheering light-emitting devices group having different group identification information from the group identification information of the first cheering light-emitting device group for the first group-performance constituting scene.

The method above may further include: receiving, by the plurality of cheering light-emitting devices, a second control signal from the control device to present a second group-performance constituting scene from the seats, wherein the first and second scenes are different from each other; checking group identification information for the second group-performance constituting scene pre-stored in each of the plurality of cheering light-emitting devices; and rendering, by a third cheering light-emitting devices group among the plurality of cheering light-emitting devices, the same color based on the same group light-emission color information according to the second control signal, wherein the third cheering light-emitting devices group has the same group identification information for the second group-performance constituting scene; wherein the second control signal includes second pairs between a plurality of group identification information and a plurality of corresponding group light-emission color information to present the second group-performance constituting scene, wherein a plurality of cheering light-emitting devices belonging to the first cheering light-emitting devices group are different from a plurality of cheering light-emitting devices belonging to the third cheering light-emitting devices group.

Further, the plurality of cheering light-emitting devices are turned on or off independently of each other in a corresponding manner to individual seats of the sports or performance venue to present the images from the seats of the sports or performance venue, wherein the plurality of cheering light-emitting devices pre-store therein not the group light-emission color information but the group identification information among the first pairs or second pairs prior to receiving the first control signal or the second control signal.

It is disclosed a method for controlling seats-based group-performance in a sports or performance venue using a plurality of cheering light-emitting devices, wherein the devices are positioned in spectator or audience seats of the sports or performance venue, the method comprising: reading, by an information processing device, seat information contained in a entry ticket to obtain spectator or audience seats position information; and recording, by the information processing device, group identification information, into a first cheering light-emitting device among the plurality of cheering light-emitting devices, wherein the group identification information is configured to group some of the plurality of cheering light-emitting devices rendering the same color into a single group, wherein the group identification information is configured based on each of a plurality of group-performance constituting scenes constituting an image to be presented, and based on group-performance presentation mapping data pre-configured for an individual seat position corresponding to the spectator or audience seats position information, wherein the group identification information includes identification information about the plurality of different group-performance constituting scenes and mapping information between a group of the first cheering light-emitting device belongs and each group-performance constituting scene.

According to another aspect of he invention, a system for controlling seats-based group-performance in a sports or performance venue using a plurality of cheering light-emitting devices includes an information processing device configured to group the plurality of cheering light-emitting devices corresponding to individual spectator or audience seats of the sports or performance venue such that cheering light-emitting devices rendering the same color for a specific group-performance presentation period belong to the same group, and to assign group identification information to the plurality of the cheering light-emitting devices; and the information processing device comprising an information recording module configured to record the group identification information corresponding to spectator or audience seats position information obtained based on ticket information into the plurality of cheering light-emitting devices, wherein the plurality of cheering light-emitting devices corresponding to individual spectator or audience seats of the sports or performance venue are selectively turned on or off, thereby to present an image from the spectator or audience seats of the sports or performance venue for a specific group-performance presentation period. The information processing device is configured as a portable device to be used by the spectator or audience together with a ticket and cheering light-emitting device when entering the venue.

In one embodiment, the system further comprises a control device configured to wirelessly broadcast group-performance presentation mapping data corresponding to the specific group-performance presentation period across the sports or performance venue, wherein the control device is configured to selectively turn on or off the plurality of cheering light-emitting devices, based on group light-emission color information corresponding to the group identification information recorded in each of the group-performance presentation mapping data received by the plurality of cheering light-emitting devices, thereby to present an image from the spectator or audience seats of the sports or performance venue for the specific group-performance presentation period.

It is disclosed a system of controlling seats-based group-performance in a sports or performance venue using a plurality of cheering light-emitting devices, wherein the plurality of cheering light-emitting devices includes first and second cheering light-emitting devices to wirelessly receive a first control signal from an outside to present a first group-performance constituting scene from the seats, wherein the first control signal includes pairs between a plurality of group identification information and a plurality of corresponding group light-emission color information to present the first group-performance constituting scene, wherein the first cheering light-emitting device is configured to obtain the group light-emission color information corresponding to the group identification information contained in the first control signal, based on the group identification corresponding to the first group-performance constituting scene as pre-stored therein, wherein the first cheering light-emitting device is further configured to render a predefined color based on the obtained group light-emission color information to present the first group-performance constituting scene.

The first and second cheering light-emitting devices may have the same group identification information, wherein the first and second cheering light-emitting devices may render the same color to present the first group-performance constituting scene.

The first and second cheering light-emitting devices may have different group identification information, wherein the first and second cheering light-emitting devices may render different colors to present the first group-performance constituting scene.

The cheering light-emitting devices may be controlled on a group basis in the group-performance presentation in the sports or performance venue. This may allow using the frequency band more efficiently compared to the conventional individual control of each of the cheering light-emitting devices. In addition, the delay time of the control signal can be reduced. Further, simultaneous control can be performed in real time via the group-based control of the cheering light-emitting devices.

The light-emission state of the cheering light-emitting devices may be changed and rendered in real time during the group-performance presentation in the sports or performance venue. Thus, various group-performance scenes and light-emission effects may be easily realized depending on situations.

Effects of the present disclosure are not limited to the effects mentioned above. Other effects as not mentioned may be clearly understood by those skilled in the art from the descriptions below.

### BRIEF DESCRIPTION OF THE FIGURES

The above and other objects and features will become apparent from the following description with reference to the following figures, wherein like reference numerals refer to like parts throughout the various figures unless otherwise specified, and wherein:
FIG. 1 is a schematic representation of a configuration of a light-emission control system for group-performance presentation in a sports or performance venue according to one embodiment of the present disclosure.
FIG. 2 is a schematic view of a sports or performance venue to which a light-emission control system according to one embodiment of the present disclosure may be applied.
FIG. 3 is a diagram showing a configuration of a control device according to one embodiment of the present disclosure.
FIG. 4 shows a configuration of a cheering light-emitting device according to one embodiment of the present disclosure.
FIG. 5 is a diagram showing a configuration of an information processing device according to one embodiment of the present disclosure.
FIG. 6 is a flow chart illustrating a preliminary group-performance preparation process performed by a control device in a method for controlling group-performance in a sports or performance venue according to one embodiment of the present disclosure.
FIG. 7 is a flow chart illustrating a preliminary group-performance preparation process performed by a cheering light-emitting device in a method for controlling group-performance in a sports or performance venue according to one embodiment of the present disclosure.
FIG. 8 is a flow chart illustrating a process for producing actual group-performance in a method for controlling group-performance in a sports or performance venue according to one embodiment of the present disclosure.
FIG. 9 is a flow chart showing one example of a process performed by a control device during sports play or arts performance in a method of controlling group-performance in a sports or performance venue according to one embodiment of the present disclosure.
FIG. 10 is a flow chart illustrating one example of a process performed by a cheering light-emitting device during sports play or arts performance in a method for controlling group-performance in a sports or performance venue according to one embodiment of the present disclosure.
FIG. 11 is a flow chart illustrating one example of a preliminary group-performance preparation process performed by an information processing device in a method of controlling group-performance in a sports or performance venue according to one embodiment of the present disclosure.
FIG. 12 is a flow chart illustrating another example of a preliminary group-performance preparation process performed by an information processing device in a method of controlling group-performance in a sports or performance venue according to one embodiment of the present disclosure.
FIG. 13 is an illustration of one example of a group-performance scene presented from spectator or audience seats of a sports or performance venue according to one embodiment of the present disclosure.
FIG. 14 is a diagram illustrating group information for a group-performance scene presented in a spectator or audience seats of a sports or performance venue according to one embodiment of the present disclosure.

### DETAILED DESCRIPTION

Advantages and features of the present disclosure, and methods for accomplishing the advantages and features will become apparent with reference to embodiments described in detail below with reference to the accompanying drawings. However, the present disclosure is not limited to the embodiments disclosed below, but may be embodied in many different forms. These embodiments are provided so that understanding of the present disclosure is complete and that the present disclosure fully illustrates a scope of the present disclosure to the ordinary artisan of the art to which the present disclosure pertains.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of" when preceding a list of elements may modify the entire list of elements and may not modify the individual elements of the list. It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Reference will now be made in detail to embodiments of the present disclosure, examples of which are illustrated in the accompanying drawings.

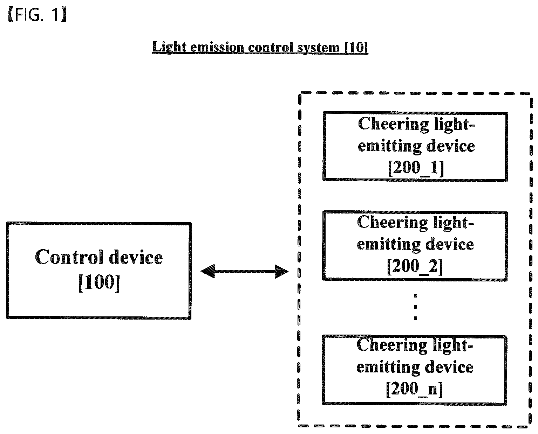

FIG. 1 is a schematic representation of a configuration of a light-emission control system for group-performance presentation in a sports or performance venue according to one embodiment of the present disclosure.

Referring to FIG. 1, a light-emission control system 10 for group-performance presentation in a sports or performance venue according to one embodiment of the present disclosure 10 may include a control device 100 and a collection of control light-emitting devices 200_1, 200_2, ..., and 200_n (hereinafter, collectively 200). In this light-emission control system 10, the control device 100 controls light-emission states of the cheering light-emitting devices 200, such that the cheering light-emitting devices 200 produces various types of light-emission patterns for group-performance presentation such as cheering performance, on spectator or audience seats in sports or performance venues.

The control device 100 may also function to control the cheering light-emitting devices 200 for group-performance presentation in a sports or performance venue. In one embodiment, the control device 100 may be embodied as an electronic device such as a smart phone, tablet, desktop PC, laptop PC, netbook computer, or the like, or may be configured in various forms. Alternatively, the control device 100 may be configured in various forms, including a form in which the device 100 includes some of components of such an electronic device or a form in which the device 100 interfaces with such components.

The cheering light-emitting device 200 may perform a function of producing various types of light-emission patterns in real time or according to predetermined control information under control of the control device 100. In one embodiment, the cheering light-emitting device 200 may include a light source and may be a miniature cheering tool used in a sports or performance venue, such as sports stadiums or concert halls.

The control device 100 and the cheering light-emitting devices 200 may communicate with each other in various ways and may be connected to each other via wireless communication, such as, for example, RF communications or electronic tags.

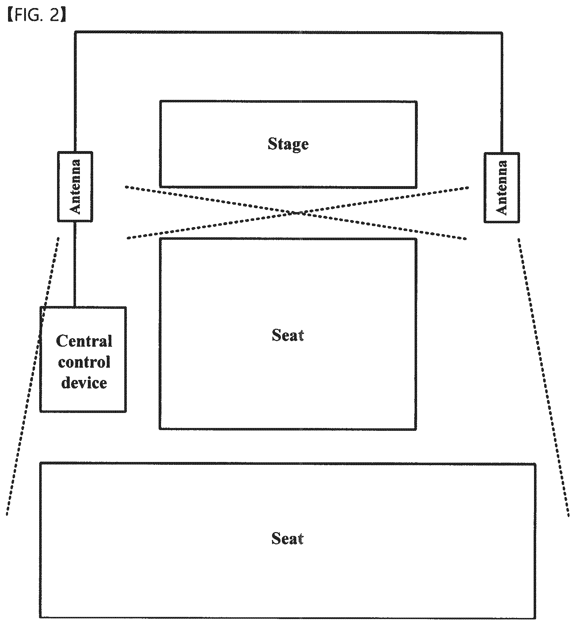

FIG. 2 is a schematic representation of a sports or performance venue in which a light-emission control system according to one embodiment of the present disclosure may be applied.

Referring to FIG. 2, a sports or performance venue is a venue for performing a performance such as sports events or a concert. The venue may be composed of, for example, a stage or a playground, spectator or audience seats, or the like. Further, sports or performance venues may be equipped with various devices required for the performance, such as audio devices and illumination devices. A central control device including a control console for coordinating and controlling operations of such devices may also be provided in the venue.

The light-emission control system 10 incorporating the control device 100 and the cheering light-emitting devices 200 according to one embodiment of the present disclosure may be applied to a sports or performance venue as shown in FIG. 2. In one embodiment, the control device 100 may be located within a sports or performance venue to control the cheering light-emitting devices 200. The cheering light-emitting devices 200 may be positioned on spectator or audience seats to produce various light-emission patterns under the control of the control device 100. In this connection, the cheering light-emitting devices 200 may be arranged in a corresponding manner to spectator or audience seats based on a spectator or audience seats layout.

Further, the control device 100 may operate in conjunction with the central control device (refer to FIG. 2). The control device 100 may be included in the central control device. Further, the control device 100 may receive a signal from the central control device and operate in synchronization with the audio device, the illumination device, etc. in the sports or performance venue. This may allow synchronizing the cheering light-emitting devices 200 with the audio device and the illumination device to automatically produce the performance.

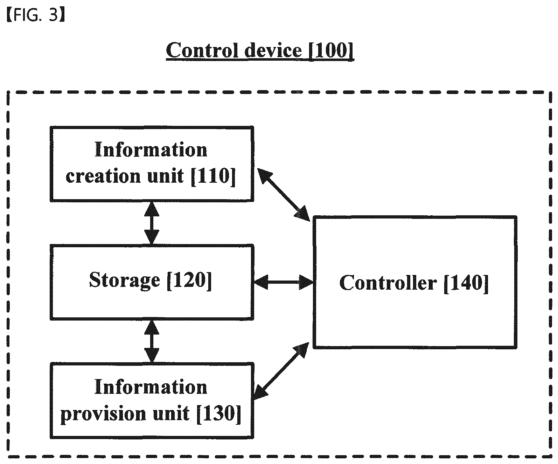

FIG. 3 shows a configuration of the control device according to one embodiment of the present disclosure.

Referring to FIG. 3, the control device 100 according to one embodiment of the present disclosure may include an information creation module 110, storage 120, an information provision module 130, and a controller 140.

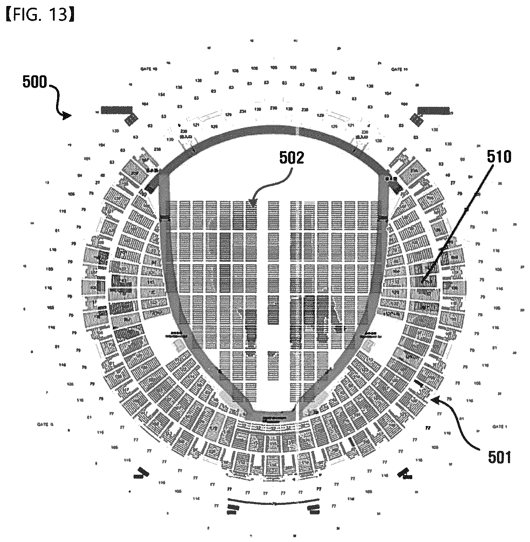

The information creation module 110 may create a group-performance scene to be presented using the cheering light-emitting devices 200 during sports play or arts performance time in the sports or performance venue. In this connection, a corresponding group-performance scene may be configured for a corresponding group-performance presentation period in an entire group-performance scene. For example, in a first group-performance presentation period, for example, at a first time, a first group-performance scene, for example, a first scene may be created. Then, a second group-performance scene (e.g., a second scene) may be created in a second group-performance presentation period (e.g., second time). When the spectator or audience seats in the sports or performance venue are configured as shown in FIG. 13, in the first group-performance presentation period, the first group-performance scene may be created that is composed as a specific text (e.g., "BIGBANG IS VIP") as in FIG. 13. In the second group-performance presentation period, a scene that is different from the first group-performance scene, as the second group-performance scene as presented by a specific shape and pattern presented in middle spectator or audience seats in FIG. 13 may be created.

The information creation module 110 groups the spectator or audience seats of the sports or performance venue into a plurality of groups based on each group-performance scene created for each group-performance presentation period. The module 110 may create group information on the plurality of groups. For example, when a plurality of groups may be grouped to realize a light emission pattern that may present the first group-performance scene to be presented in the first group-performance presentation period, the module 110 divides the spectator or audience seats of the sports or performance venue into a plurality of regions corresponding to the number of groups, and may define each divided region as each group. In other words, the first group-performance scene corresponding to the first group-performance presentation period may include a plurality of groups.

The information creation module 110 maps the group information created for each group-performance presentation period (each group-performance constituting scene). The module 110 may configure the mapped group information as group-performance presentation mapping data corresponding to each group-performance presentation period. For example, the information creation module 110 may configure group-performance presentation mapping data that maps each group information to each presentation information corresponding to each period, as shown in Table 1 below. In this connection, the group information refers to group control information for controlling the cheering light-emitting devices 200 based on each group-performance scene corresponding to each group-performance presentation period. The group control information corresponding to each group may include group identification information and corresponding light-emission state information. That is, the cheering light-emitting devices 200 having the same group identification information corresponding to each group-performance presentation period may have the same light-emission state information. Further, the cheering light-emitting devices 200 having the same group identification information may be different between the group-performance presentation periods. For example, the cheering light-emitting devices 200 having A group identification information in the first group-performance presentation period may be configured to have B group identification information in the second group-performance constituting scene. In other words, cheering light-emitting devices 200 belonging to the A group in the first group-performance presentation period and cheering light-emitting devices 200 belonging to the A group in the second group-performance presentation period may be different from each other.

**[Table 1]**

| | | Presentation information (e.g., scene information) | | | | | |
|---|---|---|---|---|---|---|---|
| | | 1 | | 2 | | ... | |
| Group information | Group-based light emission information | A | 255,255,0 | A | 0,0,0 | | |
| | | B | 154,112,55 | B | 255,0,0 | | |
| | | C | 0,0,255 | C | 0,0,255 | | |
| | | D | 0,255,255 | | | | |
| | | E | 100,100,100 | | | | |

The storage 120 may be configured to include memory, cache, buffers, etc. The storage 120 may store data received or created from other components of the control device 100 or other components of the light-emission control system 10. In one embodiment, the storage 120 may store each group-performance presentation mapping data corresponding to each group-performance presentation period created by the information creation module 110.

The information provision module 130 may provide, to corresponding cheering light-emitting devices 200, each group information corresponding to each group-performance presentation period, which is mapped according to the spectator or audience seats layout, based on each group-performance presentation mapping data.

The controller 140 may create a control signal including corresponding light-emission state information mapped to a corresponding group-performance scene to be presented in a corresponding group-performance presentation period based on corresponding group-performance presentation mapping data. Then, the controller 140 may broadcast the created control signal via wireless communication. For example, in a process of conducting a group-performance in sports or performance venue, in the first group-performance presentation period (e.g., first time), the controller 140 may obtain corresponding group information mapped to the first group-performance scene corresponding to the first group-performance presentation period (e.g., first time). According to the Table 1, the first presentation information includes mapping information five groups A, B, C, D, and E. Each of the groups A, B, C, D, and E has corresponding light-emission state information (e.g., RGB information). The controller 140 may create a control signal including each group mapped to the first group-performance presentation period and group information on the five groups including corresponding light-emission state information.

In one embodiment, the cheering light-emitting devices 200 may pre-store only group information about which group each cheering light-emitting device 200 belongs to the corresponding scene, prior to the group-performance presentation. In this case, the light-emission state information (e.g., color-information using RGB, etc.) may be excluded from the pre-stored information. the group information may mean a bundle of the cheering light-emitting devices 200 controlled to render the same color at a specific moment or scene. In other words, the group information may be configured such that a plurality of cheering light-emitting devices 200 controlled to render the same color in a specific scene have the same group information. Information about what color a corresponding group is controlled to render may be excluded from the group information.

For this purpose, the cheering light-emitting devices 200 may maintain the light-emission state information (e.g., color information) corresponding to the assigned group as empty data, or may store only dummy data or temporary color information therein. That is, an actual group-based color information may be transmitted in real time while the actual group-performance proceeds.

Accordingly, in accordance with the present disclosure, the rendered color may be changed in consideration of a mood or situation in the actual group-performance presentation process. Thus, instead of storing the color information in the cheering light-emitting devices, flexible group-performance presentation may be realized.

Control information to indicate a color to be rendered by a specific group in a specific scene may be contained and transmitted, by the controller 140, in a control signal in real time in a process in which an actual performance is performed.

As in a conventional approach, individual IDs are assigned to all cheering light-emitting devices in the spectator or audience seats respectively and then, real-time light-emission signals are individually and respectively transmitted per individual IDs. This may cause an amount of data that can be transmitted via wireless RF to be limited, thereby to disallow providing a smooth group-performance presentation. Further, this may cause a number of cheering light-emitting devices to be an out-of-control state. Furthermore, this may cause a control signal delay to make it impossible to present an intended seats group image. For example, in a sports or performance venue having 10,000 spectator or audience seats, conventionally, 10,000 RGB signal value data should be transmitted to10,000 cheering light-emitting devices respectively per each group-performance presentation period.

However, according to embodiments of the present disclosure, a plurality of cheering light-emitting devices 200 that are controlled to render the same color per each group-performance scene are grouped into the same group. In this connection, the group information to indicate a group corresponding to an individual cheering light-emitting device 200 for each performance scene corresponding to the group-performance period is pre-stored. In the venue where the performance is performed, the control device 100 transmits only color information about a color corresponding to each group to each device 200. Thus, the amount of data transmitted by the control device 100 in each scene may be greatly reduced compared to the conventional approach. For example, in a sports or performance venue having 10,000 spectator or audience seats, when each of 20 cheering light-emitting device groups is configured to render the same color in a specific scene, only 20 RGB signal value data may be transmitted to the devices 200. Therefore, in accordance with the present disclosure, a single group-performance constituting scene may be realized using only 0.2% of data transmission compared to data amount of the convention approach when the same number of the spectator or audience seats are used therebetween.

In some other embodiments, the group identification information pre-stored in the cheering light-emitting devices 200 be configured by introducing and applying a virtual coordinate system to all seats of the sports or performance venue, so that all of the seats are defined using specific coordinate values. Each seat may have a specific XY coordinate value. Multiple adjacent spectator or audience seats may have the same XY coordinate value range. Further, the present disclosure may specify a position of each of the spectator or audience seats via introduction of other types of coordinate systems in addition to the commonly used XY coordinate system.

When some or all of the group identification information pre-stored in the cheering light-emitting devices are recorded as the coordinate information, the group-performance presentation mapping data transmitted in real-time in the group-performance venue may include a control signal to specify a cheering light-emitting devices group to light-emit a specific color based on one or more specific coordinate values or a specific coordinate range and to allow the specified cheering light-emitting devices group to render the same specific color. That is, when the group identification information and group light-emission color information are mapped to each other to configure the group-performance presentation mapping data, the coordinate values or coordinate ranges may be employed instead of the group identification information. In this case, each of the cheering light-emitting devices receives the group-performance presentation mapping data in a process of presenting the group-performance, and, then, determines, based on the coordinate value to which the cheering device belongs, whether the coordinate value of the cheering device is included in specific group identification information, and, then, light-emits a corresponding color based on the determination result. When the group information employing the coordinate system configured for all of the seats of the sports or performance venue is pre-stored in the cheering light-emitting devices 200, a small amount of data transfer may allow impromptu presentation of an illumination-based group-performance scene from the spectator or audience seats. That is, the control device may create or modify and broadcast the group-performance presentation mapping data to light-emit a predetermined color from the cheering devices group having a specific coordinate range, thereby allowing variable spectator or audience seats illumination presentation.

For example, all of the spectator or audience seats of the sports or performance venue is defined using the XY coordinate system. Further, a predetermined XY coordinate is pre-assigned to each cheering light-emitting device for a specific group-performance presentation period. In this case, when implementing a corresponding group-performance presentation period in a real-time group-performance presentation process, group-performance presentation mapping data configured such that a device group in a specific coordinate range (e.g., {10, 10} to {20, 15} renders a red color (255, 0, 0) is transmitted to the plurality of cheering light-emitting devices 200. Thus, upon receiving the data, each of the plurality of cheering light-emitting devices 200 may individually determine whether each device belongs to the range from {10, 10} to {20, 15} based on the coordinate information assigned to each device. Then, upon determination that each device belongs to the range, each device may render the red color.

In another embodiment, as shown in FIG. 13, when presenting a specific graphic (e.g., "BIGBANG IS VIP"), and a specific figure and pattern from a middle region spectator or audience seats, as a group-performance scene, it may be assumed that the specific text is presented using a red color (255, 0, 0), and the specific figure and pattern are presented using a green color (0, 255, 0). In this case, conventionally, RGB signal value data is individually transmitted to each of all cheering light-emitting devices irrespective of information such as a specific pattern or a light-emission pattern for a group-performance scene to present the specific text and specific figure and pattern as shown in FIG. 13. However, according to the present disclosure, with considering the information such as the specific pattern or light-emission pattern for the group-performance scene, cheering light-emitting devices that render the same color are grouped into one group. Then, light emission control is executed on a group basis. Accordingly, the cheering light-emitting devices that present the specific text using a red color (255, 0, 0) are configured in a single group. The cheering light-emitting devices that present the specific shape and pattern with a green color (0, 255, 0) are configured in another single group. Thus, RGB signal value data (only the red signal value and the green signal value) are transmitted to the two groups respectively to present the scene shown in FIG. 13. As described above, the method of controlling the group-performance in accordance with the present disclosure may effectively transmit and receive the data compared to the conventional method of individually controlling the cheering light-emitting devices. Thus, this may allow a frequency band to be efficiently used and allow tens of thousands of cheering light-emitting devices to be controlled simultaneously without delay.

According to one embodiment of the present disclosure as described above, unlike the conventional approach, the amount of data to be transmitted is greatly reduced in the wireless RF data transmission process. Thus, this may allow only the necessary data to be transmitted to all of the cheering light-emitting devices 200 in the spectator or audience seats without using an entire wireless bandwidth. In other words, using only a portion of the entire wireless bandwidth, the control signal may be sent to the cheering light-emitting devices 200 while a remaining bandwidth region is empty. Thus, in one embodiment of the present disclosure, a dynamic group-performance scene may be instantly presented using the empty wireless bandwidth region. In one embodiment, the control device 100 may pre-transmit new presentation data or added or modified presentation data to the cheering light-emitting devices 200 over the empty wireless bandwidth region. For example, the control device 100 may calculate a time taken to transmit the data using the vacant wireless bandwidth region, configure presentation data based on the calculated time and then transmit the configured data to the cheering light-emitting devices 200.Thus, the present system may not only present the previously defined group-performance scene, but also may instantly present a new group-performance scene. This may allow immediately designing and modifying a variety of group-performance presentations in the group-performance venue.

In some other embodiments, the group-performance presentation mapping data transmitted in real-time at the venue where the performance is going on may further include dimming information required when each group render the corresponding color. For example, an A group is rendering a specific color for a specific group-performance presentation period (for a specific spectator or audience seats presentation scene). In this case, the A group should repeatedly turn on and off at a specific time interval. In this connection, when turn on and turn off signals are transmitted repeatedly, a large amount of signals are broadcast for a short period of time. Thus, an amount of data to be processed by the cheering device increases to cause a data processing delay. When the time interval is shortened to, for example, 0.5 seconds or smaller, a certain data processing delay may occur due to the real time data transmission, which may cause an undesirable group-performance scene. Therefore, for the specific group-performance presentation period in which the blinking (turning off and on) should be implemented, the group-performance presentation mapping data is transmitted only once at an initial start time of the period, and, further, information on the blinking interval and turn-on or turn-off duration are contained in the corresponding group-performance presentation mapping data. Thus, upon receiving the group-performance presentation mapping data, a cheering light-emitting device belonging to the specific group A may conduct the blinking illumination presentation for a predetermined time duration.

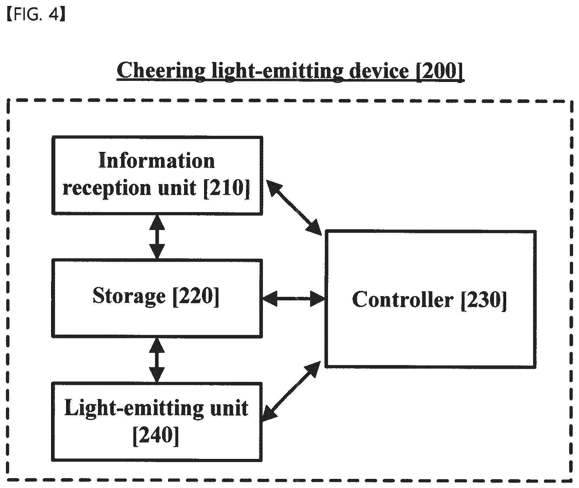

Figure 4 shows a configuration of a cheering light-emitting device according to one embodiment of the present disclosure.

Each of the cheering light-emitting devices 200 according to one embodiment of the present disclosure may be embodied in a form of a cheering light-emission rod or a cheering body-mounted device, which may be carried by the audience to conduct the group-performance presentation. The cheering light-emitting devices 200 are respectively mapped to the spectator or audience seats in a 1: 1 manner. The cheering light-emitting devices 200 may allow the spectator or audience seats to act as a display or a sign board or a media façade for displaying images in a darkened state or similar state of the sports or performance venue.

In one embodiment, each of the cheering light-emitting devices 200 may pre-store therein seat presentation data using each of the cheering light-emitting devices 200 in the spectator or audience seats prior to the group-performance presentation.

In another embodiment, as previously illustrated, the cheering light-emitting devices 200 may only store the group information about which group each cheering light-emitting device 200 belongs to per each scene prior to the group-performance presentation. In this case, the light-emission state information (e.g., color information) may be omitted from the pre-stored information. The group information may refer to a bundle of cheering light-emitting devices controlled to render the same color at a specific moment or in a specific scene.

To this end, the cheering light-emitting devices 200 may maintain the light-emission state information (e.g., illumination color information) corresponding to each group as empty data, or may store only dummy data or temporary color information therein. That is, an actual group-based color information may be transmitted in real time while the actual group-performance proceeds.

That is, the group information may be configured so that a plurality of cheering light-emitting devices, which are controlled together to render the same color in a specific scene have the same group information. Information about what color the corresponding group is controlled to render may be excluded from the group information. The rendered color may be changed in consideration of a mood or situation in the actual group-performance presentation process. Thus, instead of storing the color information in the cheering light-emitting devices, flexible group-performance presentation may be realized.

Referring to FIG. 4, each of the cheering light-emitting devices 200 according to one embodiment of the present disclosure may include an information reception module 210, storage 220, a controller 230, and a light-emitting unit 240.

The information reception module 210 may connect with another device to receive information therefrom. In one embodiment, the information reception module 210 may include a wired communication module or a wireless communication module. For example, the module 210 may include an RF transceiver, a ZigBee module, a Bluetooth module, a WIFI module, and the like.

In one embodiment, the information reception module 210 receives the group-performance presentation mapping data from the control device 100 and then extracts, from the mapping data, the group information mapped to spectator or audience seat position information of a corresponding light-emitting device, corresponding to each group-performance presentation period. Alternatively, the information reception module 210 receives, from the information processing device 300 as described later, the group-performance presentation mapping data pre-defined in spectator or audience seat position information of a corresponding light-emitting device, and, then extracts, from the mapping data, the group information corresponding to each group-performance presentation period.

In one embodiment, the information reception module 210 receives the group information mapped to the spectator or audience seat position information of the corresponding light-emitting device, corresponding to each group-performance presentation period, and configures group mapping data as shown in Table 2 below:

**[Table 2]**

| | | | | | | |
|---|---|---|---|---|---|---|
| Presentation information (e.g., scene information) | 1 | 2 | 3 | 4 | 5 | ... |
| Group information | A | C | F | G | {15, 15} | ... |

The Table 2 above may be example data of group information corresponding to a presentation scene for one specific cheering light-emitting device 200. The specific cheering light-emitting device 200 may be controlled to belong to an A group in the first scene and may be controlled in the same manner as other cheering light-emitting devices belonging to the A group. Further, when the first scene is switched to a second scene, the specific cheering light-emitting device 200 may be controlled to belong to a C group.

As described above, in the process of pre-recording the group information in each cheering light-emitting device 200, only information about the group to which each device 200 belongs is stored, and, information about light-emission state (e.g., color) which the group to which each device 200 belongs will render is not stored. Accordingly, the control device 100 includes light-emission state information (e.g., color information) into the control signal based on previous presentation data, and, then, transmits the control signal to all or some of the cheering light-emitting devices 200 positioned in the venue. For example, in the preliminary presentation preparation process, the group A is configured to render a red color (255, 0, 0) in the first scene. However, in consideration of venue atmosphere and interaction with audience, the control signal may be modified and broadcast such that the group A renders the green color (0, 255, 0). In this connection, there is no position change in the number of cheering light-emitting devices belonging to the group A controlled to render the green. Thus, a distribution of the seats occupied by the plurality of cheering light-emitting devices belonging to the group A, and a shape and pattern outline defined by the plurality of cheering light-emitting devices are not modified. At this time, only the color rendered by the cheering light-emitting devices belonging to the group A may change from the red to the green.

In one embodiment, the outline of the shape or pattern presented from the seats may be modified dynamically by sending a control signal to indicate that the same color is rendered by groups that was controlled to render different colors. For example, the specific cheering light-emitting device may be controlled to belong to an F group in a third scene. Then, the control device 100 transmits a control signal to indicate that the F group and adjacent G group render the same color. Thus, the multiple cheering light-emitting devices belonging to the F group and G group may present a new pattern or shape.

In some other embodiments, as in a fifth scene, a format of the group identification information may be embodied as coordinate type information rather than a specific group code. As described above, the group identification information stored in advance in the cheering light-emitting device is defined as a specific coordinate value or range via the introduction and application of a virtual coordinate system for all of the seat of the sports or performance venue. One spectator or audience seat may have a specific XY coordinate value. Multiple adjacent spectator or audience seats may have the same XY coordinate range. Further, the present disclosure may specify positions of the spectator or audience seats via introduction of other types of coordinate systems in addition to the commonly used XY coordinate system. The cheering light-emitting device receives the group-performance presentation mapping data in the process of conducting the performance. Based on the coordinate value to which the cheering device belongs, the cheering device determines whether the position of the cheering device is included in the specific group identification information. Then, in a positive determination result, a corresponding color may be rendered by the cheering device. For example, in the real-time group-performance presentation process, the group-performance presentation mapping data corresponding to the fifth scene is configured to allow the cheering devices in a range of from {10, 10} to {20, 20} to render a red color (255, 0, 0). In this case, upon receiving the mapping data, one specific cheering light-emitting device 200 may determines that the specific device belongs to the range from {10, 10} to {20, 20} based on the coordinate information {15, 15} assigned thereto, and, then, may render the red color.

The storage 220 may be configured to include a memory, a cache, a buffer. The storage 220 may store data received or created from other components of the cheering light-emitting device 200, the control device 100, or the information processing device 300. In one embodiment, the storage 220 may store the spectator or audience seats position information of the sports or performance venue, and group mapping data based on the spectator or audience seats position information as received by the information reception module 210.

As described above, the mapping data information reception module 210 receives, from an external device (e.g., control device 100, information processing device 300, etc.), the spectator or audience seats position information, and the group mapping data based on the spectator or audience seats position information, and store the received data or information in the storage 220. Alternatively. according to one embodiment, a spectator or audience may input entrance ticket information via a PC or a smart device. The information reception module 210 may receive the group mapping data mapped to the input entrance ticket information via a wired/wireless communication module and store the received group mapping data in the storage 220.

The controller 230 may receive a control signal from the control device 100. In this connection, a control signal corresponding to group information about a group of the cheering light-emitting devices 200 may be selectively received by the controller 230. In one embodiment, the controller 230 may selectively extract, from the control signal, only the light-emission state information corresponding to the group information about the group of the cheering light-emitting devices 200 from the control signal, based on group mapping data according to the spectator or audience seats position information. Then, the controller 230 may control the group of the cheering light-emitting devices 200 to operate light-emitting units 240 thereof based on the extracted light-emission state information.

The light-emitting unit 240 may include one or more light source elements. For example, a light emitting diode (LED), or the like may be used as the light source element. Further, the light-emitting unit 240 may output light of various colors based on the RGB color information using the light source device.

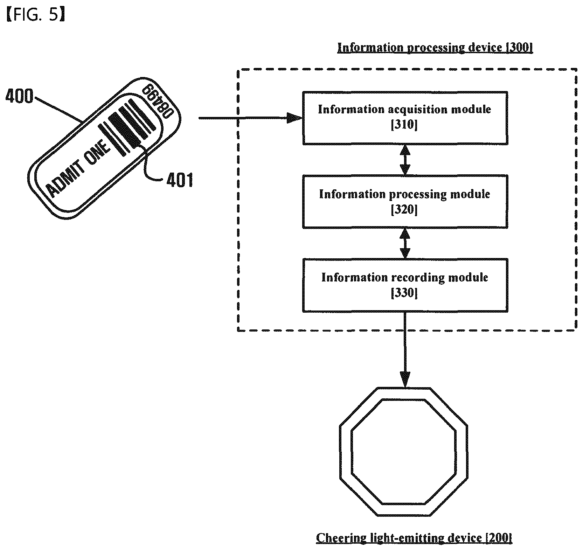

FIG. 5 is a diagram showing a configuration of an information processing device according to one embodiment of the present disclosure.

Referring to FIG. 5, the information processing device 300 according to one embodiment of the present disclosure may be configured for processing the group information in advance such that the processed group information is to be stored in the cheering light-emitting devices 200. The information processing device 300 may include an information acquisition module 310, an information processing module 320, and an information recording module 330.

The information acquisition module 310 may acquire the spectator or audience seats position information of the sports or performance venue. The spectator or audience seats position information refers to position information of the spectator or audience seats where the cheering light-emitting devices 200 are positioned in the sports or performance venue. For example, the spectator or audience seats position information may include a seat number of each of the spectator or audience seats. Alternatively, the spectator or audience seats position information may be additional information configured for position identification of the cheering light-emitting devices 200 to be positioned in a corresponding manner to the spectator or audience seats.

In one embodiment, the information acquisition module 310 may obtain the spectator or audience seats position information from a pre-issued entrance ticket, or may obtain the spectator or audience seats position information pre-stored in the cheering light-emitting devices 200 therefrom. For example, the module 310 may extract the spectator or audience seats position information by recognizing electronic code information 401 such as a bar code, a QR code, etc. printed on an entrance ticket 400 of an electronic form transmitted into a smart device or on a paper ticket. Alternatively, the spectator or audience seats position information may be obtained from electronic code information embedded in the cheering light-emitting device 200 or identification information assigned to the cheering light-emitting device 200. Alternatively, the user may read a seat number printed on the ticket and input the number into the device 300. Then, the information acquisition module 310 may obtain the spectator or audience seats position information from the input seat number.

Further, the information acquisition module 310 may be configured to include an optical scanner or a kiosk capable of recognizing the electronic code information such as a bar code, a QR code, and the like. In this case, the information acquisition module 310 may recognize the electronic code information of the ticket and the information processing device 300 receives from the module 310 the electronic code information via a physical medium or over a network. According to one embodiment, the information acquisition module 310 may be configured separately from the information processing device 300.

The information processing module 320 may check group-performance presentation mapping data preset for a corresponding position based on the spectator or audience seats position information. In one embodiment, the information processing module 320 may check group information corresponding to a group-performance constituting scene mapped to the corresponding spectator or audience seats position information from the group-performance presentation mapping data stored in the control device 100 or a database of the external server. According to one embodiment, the information processing device 300 may pre-receive and pre-store the group-performance presentation mapping data from the control device 100 or from the database of the external server.

Further, the information processing module 320 may configure the group-performance constituting scene mapped to the spectator or audience seats position information, and the group information corresponding to the group-performance constituting scene into a format (e.g., group mapping data in Table 2 above) that may be provided to the emitting devices 200.

The information recording module 330 may record the group-performance constituting scenes and group information independently assigned to each of the group-performance constituting scenes based on the group-performance presentation mapping data, into cheering light-emitting devices 200 having corresponding spectator or audience seats position information. In this connection, the information recording module 330 may record, as the group information, only the group identification information of the group to which the cheering light-emitting devices 200 belong, in a manner corresponding to each group-performance constituting scene. The module 330 may not record, as the group information, the light-emission state information corresponding to each group identification information. In this case, the module 330 may maintain the light-emission state information corresponding to each group identification information as empty data, or may record dummy data or temporary information in the cheering devices.

In one embodiment, the information recording module 330 may be configured to include a communication device that may easily transmit and receive information, such as an RF tag device, an NFC input device, and an IR (infrared ray) device. In this case, the information processing device 300 may tag the cheering light-emitting devices 200 via the information recording module 330, such that the group-performance constituting scene mapped to the spectator or audience seats position information and the group information corresponding to each group-performance constituting scene may be recorded into the cheering light-emitting devices 200. According to one embodiment, the information recording module 330 may be configured separately from the information processing device 300.

The information processing device 300 is carried by the spectator or audience together with a ticket and cheering light-emitting device 200 who enters the venue. When the spectator or audience reaches the venue, ticket matching and validity are confirmed via the information acquisition module 310. Once confirmed successfully, the information processing module 320 may check spectator or audience seats presentation data (group-performance presentation mapping data) previously configured based on a sports or arts performance timetable. Thus, the group information corresponding to the group-performance constituting scene based on the corresponding seat is checked by the information processing module 320. The information processing module 320 may record the checked information into the cheering light-emitting devices 200 via the information recording module 330.

In another embodiment of the present disclosure, without using the information processing device 300, a user (e.g., spectator or audience) may directly record, into the cheering light-emitting devices 200, the group information corresponding to each group-performance constituting scene mapped to the corresponding spectator or audience seats position information. For example, a spectator or audience may input ticket information printed on a paper ticket or electronic form ticket via a PC or a smart device. Then, based on the ticket information the user has entered, the user (user device) checks the spectator or audience seats presentation data (group-performance presentation mapping data) pre-configured based on a sports or arts performance timetable. Thus, the group information corresponding to the group-performance scene for the corresponding seat is acquired by the user. The obtained corresponding information may be recorded by the user (user device) into the cheering light-emitting devices 200 via a short-range wireless communication module such as NFC or Bluetooth or a wired cable such as a micro 5-pin. In this process, the user may use a user device such as a PC or a notebook computer to record the data into the cheering light-emitting devices via a wired or wireless connection. For example, the data may be recorded on the cheering light-emitting device while the data may be downloaded into a smartphone from the PC or laptop. Further, the group information may be directly recorded onto the cheering light-emitting device while the information may be downloaded from the smart phone via a wireless Internet module into the cheering device. In this connection, a smart device such as a smart phone may have an application installed therein to execute a method of controlling the group-performance according to the present disclosure. Such an application may be used to perform the above-described process.

In one example, when the information processing device 300 records the group information corresponding to the group-performance constituting scene into the cheering light-emitting devices 200 as described above, the light-emitting units 240 of the cheering light-emitting devices 200 may render a predetermined color. Accordingly, it may be confirmed that the corresponding information is successfully downloaded to the cheering light-emitting devices 200 via the information processing device 300.

Hereinafter, a method of controlling group-performance in a sports or performance venue according to the present disclosure as performed by the control device 100, the cheering light-emitting devices 200, and the information processing device 300 will be described.

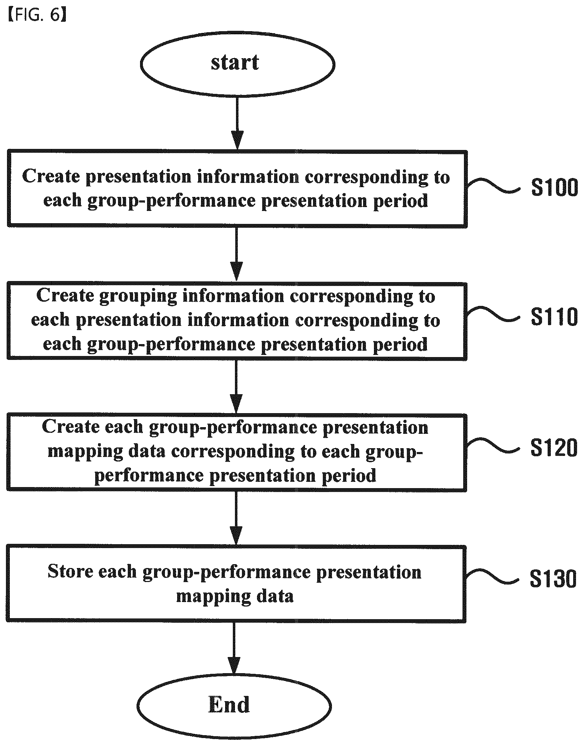

Figure 6 is a flow chart showing a preliminary group-performance preparation process as performed by the control device 100 in a method for controlling group-performance in a sports or performance venue according to one embodiment of the present disclosure.

Referring to FIG. 6, the information creation module 110 of the control device 100 may create a group-performance scene to be presented using the cheering light-emitting devices 200 positioned in the spectator or audience seats in the sports or performance venue during sport play or art performance S100. In this connection, the information creation module 110 may configure at least one group-performance scene, in consideration of sports play or arts performance time or a group-performance scene to be presented via the cheering light-emitting devices 200. Each group-performance scene may be created in a corresponding manner to each group-performance presentation period.

The information creation module 110 may group the spectator or audience seats into plural groups based on light-emission state information that may be configured on a group basis based on each group-performance scene created in a corresponding manner to each group-performance presentation period. Then, the module 110 may define a plurality of groups corresponding to each group-performance scene corresponding to each group-performance presentation period S110.

In one embodiment, the information creation module 110 may determine a single set of groups configured based on light-emission state information capable of presenting each group-performance scene created correspondingly to each group-performance presentation period, based on spectator or audience seats layout information. The module 110 may divide the spectator or audience seats into a plurality of groups correspondingly to the determined single set of groups and create group information corresponding to each group. For example, when the first group-performance scene corresponding to the first group-performance presentation period may be conducted using five light-emission state information (e.g., RGB color combinations) as shown in Table 1, the information creation module 110 divides the spectator or audience seats into five groups (e.g., A, B, C, D, and E) based on the spectator or audience seats layout. Then, the module 110 may create multiple seat groups corresponding to each presentation information.

The information creation module 110 maps a plurality of groups to each group-performance scene corresponding to each group-performance presentation period based on the spectator or audience seats layout information and light-emission state information. Thus, the module 110 creates each group-performance presentation mapping data corresponding to each group-performance presentation period S120.

In one embodiment, each group-performance presentation mapping data includes each group-performance scene to be presented correspondingly to each group-performance presentation period, and grouping information corresponding to each group-performance scene. In the mapping data, a relationship between each group-performance scene and each grouping information may be tabulated. In this connection, the group information may include the group identification information corresponding to the corresponding group-performance scene, the light-emission state information to be presented by the corresponding group, and the spectator or audience seats position information belonging to the corresponding group. The light-emission state information may refer to information indicating the light-emission state output through the light sources of the cheering light-emitting devices 200. The state information may include color information such as RGB, a light source brightness, a light source blinking, a blinking time, a blinking rate, and the like. In one example, the group-performance presentation period and the corresponding group-performance presentation mapping data may be configured in a form of a table as shown in Table 1. However, this is only one example and the present disclosure is not limited thereto.

The information creation module 110 may store the group-performance presentation mapping data corresponding to the group-performance presentation period into the storage 120 at S130. According to one embodiment, group-performance presentation mapping data corresponding to the group-performance presentation period may be transmitted to an external device and stored on the external device.

Although the above-described operations S100 to S130 are illustrated as being performed by the control device 100, the present disclosure is not limited thereto. In some embodiments, the above-described operations S100 to S130 may be implemented by a device (hereinafter, simulation device) that may perform a simulation function as separately configured from the control device 100. In this case, the simulation device performs the operations S100 to S130. Then, the group-performance presentation mapping data corresponding to the group-performance presentation period as created by the simulation device may be provided to the control device 100. In this case, the information creation module 110 may acquire the group-performance presentation mapping data corresponding to the group-performance presentation period from the simulation device and store the group-performance presentation mapping data in the storage 120.

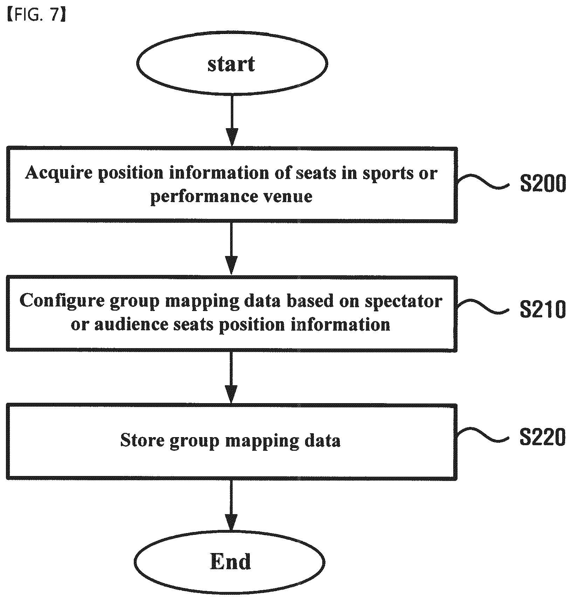

FIG. 7 is a flow chart illustrating a preliminary group-performance preparation process performed by the cheering light-emitting devices 200 in a method for controlling group-performance in a sports or performance venue according to one embodiment of the present disclosure.

Referring to FIG. 7, the information reception module 210 of each of the cheering light-emitting devices 200 may acquire the spectator or audience seats position information of a sports or performance venue where the cheering light-emitting devices 200 are to be positioned S200. In this connection, the spectator or audience seats position information may refer to identification information of the spectator or audience seats preset according to the spectator or audience seats layout of the sports or performance venue as described above. The spectator or audience seats position information may be, for example, the seat numbers of the spectator or audience seats. Alternatively, the spectator or audience seats position information may be embodied as additional information configured for position identification of the cheering light-emitting devices 200 to be positioned, corresponding to each of the spectator or audience seats. In one example, the spectator or audience seats position information may be position information additionally configured correspondingly to the seat numbers of the spectator or audience seats.

In one embodiment, the information reception module 210 may acquire the spectator or audience seats position information from the pre-issued ticket information for sports or arts performance. Alternatively, the module 210 may obtain the spectator or audience seats position information using identification information pre-configured in the cheering light-emitting devices 200.

In another embodiment, the control device 100 or the information processing device 300 may read the position information of the spectator or audience seats from a previously issued ticket for sports or arts performance. The read information may be provided to the information reception module 210. In this case, the information reception module 210 may acquire the spectator or audience seats position information from the control device 100 or the information processing device 300 and store the information in the storage 220.

The information reception module 210 may acquire, from the group-performance presentation mapping data, the group information mapped to the spectator or audience seats position information to which the cheering light-emitting devices 200 are to be positioned, in a corresponding manner to each group-performance presentation period. The module 210 may configure the group mapping data according to the spectator or audience seats position information S210. In this connection, the information reception module 210 may check the group-performance presentation mapping data from the control device 100, the information processing device 300, or the database of the external server.

For example, when the group-performance presentation group-performance presentation mapping data as shown in Table 1 has been checked from the control device 100, the information processing device 300, or the database of the external server, the information reception module 210 may obtain group information (e.g., A) mapped to the spectator or audience seats position information of the corresponding cheering device among a plurality of groups mapped to the first presentation information; and the module 210 may obtain group information (e.g., C) mapped to the spectator or audience seats position information of the corresponding cheering device among a plurality of groups mapped to second presentation information. Finally, the information reception module 210 may configure group mapping data corresponding to each group-performance scene from the cheering light-emitting devices 200 shown in Table 2 above.

The information reception module 210 may store the group mapping data according to the spectator or audience seats position information into the storage 220 at S220.

According to one embodiment of the present disclosure as described above, the information reception module 210 of each of the cheering light-emitting devices 200 performs the operations S200 to S220. However, this is only an example and the present disclosure is not limited thereto. According to another embodiment, the operations S200 to S220 may be performed by the control device 100 or the information processing device 300 to provide the group mapping data according to the spectator or audience seats position information to the cheering light-emitting devices 200. For example, the control device 100 or the information processing device 300 may extract the spectator or audience seats position information of each of the cheering light-emitting devices 200 from the information pre-configured in the entrance ticket or the cheering light-emitting devices 200. Then, the control device 100 or the information processing device 300 may create the group mapping data by checking the group information mapped to the extracted spectator or audience seats position information from the group-performance presentation mapping data. Then, the control device 100 or the information processing device 300 may provide the created group mapping data to each of the cheering light-emitting devices 200. Accordingly, the information reception module 210 of the cheering light-emitting devices 200 may acquire the group mapping data corresponding to the spectator or audience seats position information of the corresponding cheering device 200 from the control device 100 or the information processing device 300 and store the group mapping data in the storage 220.

The embodiment of Figure 7 as described above may be performed in a ticket check process before the sports or arts performance. The audience having the above operations S200 to S220 completed may carry the cheering light-emitting device 200 having the group mapping data corresponding to the spectator or audience seats position information thereof, and may enter the sports or performance venue and may occupy one of the corresponding spectator or audience seats. In some embodiments, the cheering light-emitting devices 200 may be used instead of the entrance tickets. In this case, the cheering light-emitting devices 200 in place of the tickets may be pre-distributed to the audiences in a state in which the operations S200 to S220 have been completed. As a result, the audiences may enter the sports or performance venue immediately after the ticket checking process without having to perform the operation S200 to S220 in the ticket checking process.

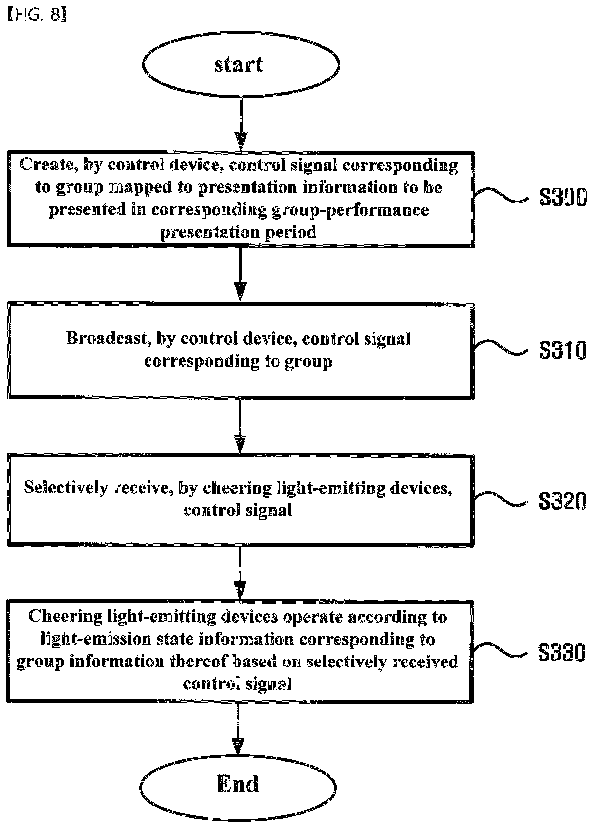

FIG. 8 is a flow chart illustrating a process performed during a performance in a method for controlling group-performance in a sports or performance venue according to one embodiment of the present disclosure. The method of Figure 8 may be performed by the control device 100 and cheering light-emitting devices 200.

One fashion of controlling group-performance in a sports or performance venue according to one embodiment of the present disclosure is to divide the cheering light-emitting devices 200 in multiple groups as described above, and to perform a process to create the group-performance presentation mapping data based on information about the group. In one embodiment, the control device 100 may selectively turn on or off the plurality of cheering light-emitting devices 200 corresponding to individual seats in the sports or performance venue. In order to present an image (group-performance-scene) from the spectator or audience seats of the sports or performance venue for a specific group-performance presentation period, some of the cheering light-emitting devices 200 rendering the same color for the specific group-performance presentation period among all of the cheering light-emitting devices 200 are configured into the same group. Thus, the same group identification information are allocated to the same group. In addition, the control device 100 may create the group-performance presentation mapping data mapping between the group identification information for the specific group-performance presentation period and the group light-emission color information rendered by the group of the group identification information. Further, the group identification information of the group-performance presentation mapping data corresponding to the seat position information obtained beforehand by the information processing device 300 on the basis of the ticket information are recorded to the plurality of cheering light-emitting devices 200.

Thereafter, when a performance in the sports or performance venue proceeds, the control device 100 may wirelessly broadcast, into the sports or performance venue, the group-performance presentation mapping data corresponding to the specific group-performance presentation period in response to a group-performance presentation sequence during the performance progress process. Then, the plurality of cheering light-emitting devices 200 may turn or off a plurality of light emission sources thereof according to the group light-emission color information corresponding to the group identification information recorded in each of the received group-performance presentation mapping data, thereby to present the image (group-performance scene) from the seats of the sports or performance venue. Hereinafter, the group-performance presentation method performed during a performance proceeds will be specifically described.

Referring to FIG. 8, the controller 140 of the control device 100 may generate a control signal corresponding to the group mapped to the presentation information presented in a corresponding group-performance presentation period (corresponding group-performance constituting scene) based on the preset group-performance presentation mapping data as the performance proceeds S300.

In one embodiment, when the group-performance presentation period is determined by a predetermined condition, the controller 140 may acquire group information about a plurality of groups mapped to the corresponding group-performance presentation period determined from the group-performance presentation mapping data, and create a control signal corresponding to each group. In this connection, the predetermined condition may be configured such that as time progresses in the performance at the sports or performance venue, the group-performance presentation periods may be defined based on a sequence configured in the group-performance presentation mapping data. Alternatively, the predetermined condition may be configured such that the group-performance presentation periods may be defined upon reception of performance presentation request signal requesting a specific group-performance presentation period (specific group-performance constituting scene) as transmitted from a user (e.g., a group-performance producer, etc.). A case where the group-performance presentation mapping data corresponding to the group-performance presentation period is created as shown in Table 1 may be considered by way of example. When the controller 140 decides to present a second group-performance constituting scene corresponding to a second group-performance presentation period as the performance progress, the controller 140 may obtain three groups (e.g., A, B, C) mapped to the second group-performance scene and corresponding light-emission state information (e.g., RGB color information). The controller 140 may then create a control signal that includes the determined corresponding group-performance presentation period information (e.g., the second group-performance presentation period), information about a plurality of groups mapped thereto (e.g., three group identification information and corresponding light-emission state information of each group), etc.

Further, the controller 140 may create a control signal for control of the cheering light-emitting devices 200 in real time based on communication status, group-performance scene, and the like. In one embodiment, when a group-performance producer wants to control a group-performance scene for a specific group-performance presentation period in real time or to change a preset group-performance scene, the controller 140 may generate a control signal by including control information to be controlled in a corresponding manner to a plurality of groups mapped to a specific group-performance presentation period. For example, when the group-performance scene for the specific group-performance presentation period is mapped to only the plurality of groups and light-emission state information of each group is not configured, the controller 140 may configure the light-emission state information of the cheering light-emitting devices 200 corresponding to each group according to the group-performance scene to be presented during the performance progresses to creates the control signal, which, in turn, may control the emitting devices 200. Alternatively, when the producer changes and renders the light-emission state information (e.g., RGB color information) pre-configured for each group mapped to the specific group-performance presentation period, the controller 140 may be configured to modify the light-emission state information (e.g., RGB color information) for each group to configure the control signal. Thus, in one embodiment, the light-emission state information (e.g., RGB color information) of the emitting devices 200 may be controlled on a group basis in a real time manner, thereby to present various group-performances.

The controller 140 may broadcast the control signal corresponding to the group as created according to the presentation information in the corresponding group-performance presentation period via the wireless communication S310.

In one embodiment, the controller 140 may transmit control signals corresponding to the groups using different frequency bands. For example, the control signal for the first group may be transmitted via a first frequency band, while the control signal for the second group may be transmitted via a second frequency band.

The controller 230 of each of the cheering light-emitting devices 200 may selectively receive the control signal from the control device 100 S320.

In one embodiment, the controller 230 may check the group information of the corresponding cheering device 200 mapped to the corresponding group-performance presentation period from the group mapping data mapped to the spectator or audience seats position information of the corresponding cheering device 200 stored in the storage 220. Then, the controller 230 may selectively receive only the control signal corresponding to the checked group information of the corresponding cheering device 200 among the broadcasted control signals.

The light-emitting unit 240 of each of the cheering light-emitting devices 200 may operate according to the light-emission state information of each of the cheering light-emitting devices 200 corresponding to the group information thereof based on the selectively received control signal S330.

In one embodiment, the controller 230 may check the light-emission state information (e.g., RGB color information) mapped to the group information of the corresponding cheering light-emitting device 200 from the group mapping data mapped to the spectator or audience seats position information of the corresponding cheering light-emitting device 200 as stored in the storage 220. Accordingly, the light-emission from the light-emitting unit 240 may be controlled by the controller 230. In another embodiment, when the light-emission state information is included in the control signal selectively received by the controller 230, the controller 230 may adjust the light-emission from the light-emitting unit 240 for a corresponding group-performance presentation period based on the light-emission state information (e.g., RGB color information) included in the control signal.

Further, according to one embodiment of the present disclosure, the control device 100 may receive a signal from the central control device (see FIG. 2) and operate in synchronization with the audio device, the illumination device, or the like within the sports or performance venue. In this case, the control device 100 and the cheering light-emitting devices 200 may receive a synchronization signal from the central control device and automatically perform the operations S300 to S330 in synchronization with the audio device and illumination device in the sports or performance venue.

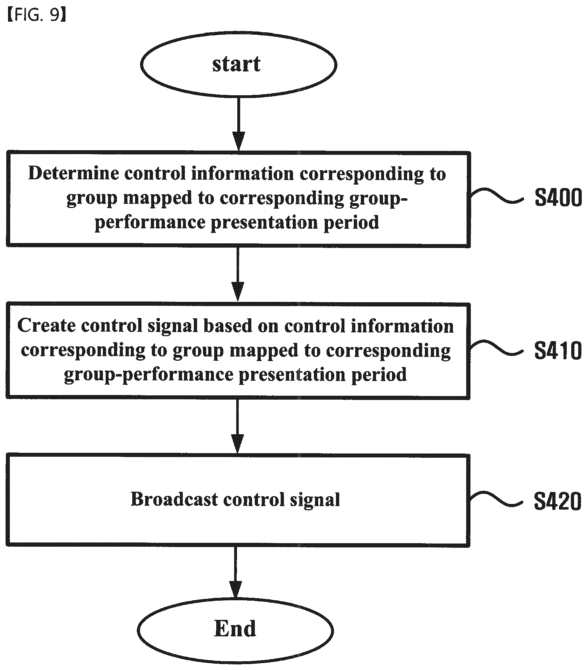

FIG. 9 is a flow chart illustrating one example of a process performed by the control device 100 during a performance progress in a method for controlling group-performance in a sports or performance venue according to one embodiment of the present disclosure.

Referring to FIG. 9, the controller 140 of the control device 100 may generate a group-based control signal in a corresponding group-performance presentation period (corresponding group-performance constituting scene) based on the group-performance presentation mapping data as the performance progresses S400.

In this connection, as described above, the group-performance presentation mapping data may include a relationship between: a group-performance scene to be presented using the cheering light-emitting devices 200 to be positioned in the spectator or audience seats of a sports or performance venue as created in the group-performance presentation period during the performance progression; and the group-based control information for controlling the cheering light-emitting devices 200 corresponding to each group corresponding to each group-performance scene corresponding to the group-performance presentation period. Further, the group-based control information may include: the group information (e.g., group identification information) created via grouping the cheering light-emitting devices 200 to be configured to render the same light-emission state information based on each group-performance scene created corresponding to the group-performance presentation period; and the light-emission state information for each group information.

In one embodiment, the controller 140 may determine a corresponding group-performance presentation period based on a sequence of the group-performance presentation periods pre-configured in the group-performance presentation mapping data. In an alternative, the controller 140 may determine a corresponding group-performance presentation period based on the group-performance presentation request signal as received from the user. Once the corresponding group-performance presentation period is determined, the controller 140 of the control device 100 may acquire the group-based control information mapped to the corresponding group-performance presentation period based on the group-performance presentation mapping data.

The controller 140 of the control device 100 may create the control signal based on the information on the corresponding group-performance presentation period and the group-based control information in the corresponding group-performance presentation period S410.

In one embodiment, the controller 140 may create the control signal by including the light-emission state information predetermined for each group in the corresponding group-performance presentation period. Alternatively, the control signal may be created by the controller 140 configuring the light-emission state information corresponding to each group in a real time manner based on the group information mapped to the corresponding group-performance presentation period. In this case, since the light-emission state information of the cheering light-emitting devices 200 corresponding to the group may be controlled in real time, this may present various group-performance scenes.

The controller 140 of the control device 100 may broadcast the control signal to the cheering light-emitting devices 200 within the sports or performance venue via wireless communication S420.

The cheering light-emitting devices 200 according to one embodiment of the present disclosure are mapped to the spectator or audience seats position information in the sports or performance venue. The group control information created in a corresponding manner to the group-performance presentation period based on the mapped spectator or audience seats position information is pre-stored in the storage 220. Thus, each of the cheering light-emitting devices 200 may selectively extract the group control information (e.g., group identification information and light-emission state information of thereof from the control signal broadcasted from the controller 140. Then, each of the cheering light-emitting devices 200 may render the light-emission state based on the extracted group control information (e.g., light-emission state information).

Further, the controller 140 of the control device 100 may group the cheering light-emitting devices 200 based on the spectator or audience seats position information associated with the cheering light-emitting devices 200, and thus may create the control information corresponding to each group. Thus, instead of individually controlling all of the cheering light-emitting devices 200 within the sports or performance venue, the cheering light-emitting devices 200 belonging to the same group may be considered as a single unit which may be controlled. Thus, even in presence of thousands to tens of thousands of the cheering light-emitting devices 200 in the sports or performance venue, the controller 140 may efficiently control the cheering light-emitting devices 200 on a group basis.

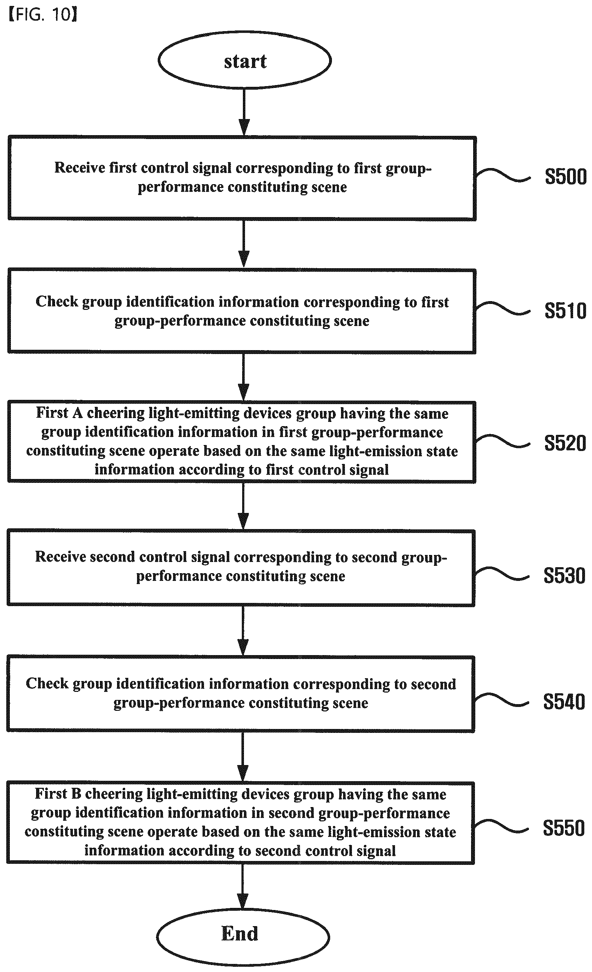

FIG. 10 is a flow chart illustrating one example of a process performed by cheering light-emitting devices 200 during the performance progression in a method of controlling group-performance in a sports or performance venue according to one embodiment of the present disclosure .

Referring to FIG. 10, the plurality of cheering light-emitting devices 200 may receive a first control signal transmitted from the control device 100 in order to present a first group-performance constituting scene on the corresponding seats S500.

The plurality of cheering light-emitting devices 200 may check the group identification information for the first group-performance constituting scene pre-stored in each of the plurality of cheering light-emitting devices 200.

In this connection, each of the plurality of cheering light-emitting devices 200 may be mapped to the spectator or audience seats position information in the sports or performance venue. The group control information (e.g., group identification information) as created in corresponding manner to the group-performance constituting scene based on each of the mapped position information of the spectator or audience seats is pre-stored. In one embodiment, the storage 220 of each of the cheering light-emitting devices 200 may store the group mapping data including the group control information corresponding to the group-performance constituting scene as shown in Table 2 above. Thus, each of the plurality of cheering light-emitting devices 200 may obtain the group identification information thereof mapped to the first group-performance constituting scene from the group mapping data pre-stored in the storage 220.

A first cheering light-emitting devices group having the same group identification information for the first group-performance constituting scene among the plurality of cheering light-emitting devices 200 may render the same light emission state (e.g., color) based on the same light-emission state information (e.g., the same light-emission color information) according to the first control signal S520.

In one embodiment, in order to present the first group-performance constituting scene, the first control signal may include pairs between the plurality of group identification information and the plurality of the light-emission state information group for the plurality of groups. Further, the first control signal may include light-emission state information about the first cheering light-emitting devices group and light-emission state information about a second cheering light-emitting devices group having group identification information different from that of the first cheering light-emitting devices group for the first group-performance constituting scene.

The plurality of cheering light-emitting devices 200 may receive the first control signal from the control device 100. Then, the devices 200 may receive the second control signal sent from the control device 100 to present, on the corresponding seats, a second group-performance constituting scene other than the first group-performance constituting scene S530.

In this case, the plurality of cheering light-emitting devices 200 may check the group identification information in the second group-performance constituting scene stored in advance in each of the plurality of cheering light-emitting devices 200 S540. Then, a third cheering light-emitting devices group having the same group identification information in the second group-performance constituting scene among the plurality of cheering light-emitting devices 200 may render the same light-emission state (e.g., the same color) based on the same light-emission state information (e.g., the same group light-emission color information) S550.

In order to present the second group-performance constituting scene, the second control signal may include pairs between the plurality of group identification information and a plurality of light-emission state information (group light-emission color information) for the plurality of groups. Further, the plurality of cheering light-emitting devices 200 belonging to the first cheering light-emitting device group and the plurality of cheering light-emitting devices 200 belonging to the third cheering light-emitting device group may be different from each other.

In one embodiment, the plurality of cheering light-emitting devices 200 may be turned on or off independently of one another in a corresponding manner to individual seats in the sports or performance venue, thereby presenting an image (group-performance-scene) on the corresponding seats in the sports or performance venue. To present the first group-performance constituting scene or the second group-performance constituting scene, the plurality of cheering light-emitting devices 200 may pre-store only the plurality of group identification information therein among the pairs between the plurality of group identification information and the plurality of group light-emission color information, before receiving the first control signal or the second control signal.

For example, the first cheering light-emitting device 200 among the plurality of cheering light-emitting devices 200 may acquire the corresponding group light-emission color information corresponding to the group identification information in the first control signal, based on the pre-recorded group identification information therein for the first group-performance constituting scene. Then, the first cheering light-emitting device 200 may render the corresponding color corresponding to the obtained group light-emission color information for the first group-performance constituting scene. In this connection, when the second cheering light-emitting devices group among the plurality of cheering light-emitting devices 200 includes the same group identification information as the first cheering light-emitting devices group, the second cheering light-emitting devices group may render the same color as the first cheering light-emitting devices group in the first group-performance constituting scene. On the other hand, when the second cheering light-emitting devices group includes different group identification information than that of the first cheering light-emitting devices group, the second cheering light-emitting devices group may render a different color from that of the first cheering light-emitting devices group in the first group-performance constituting scene.

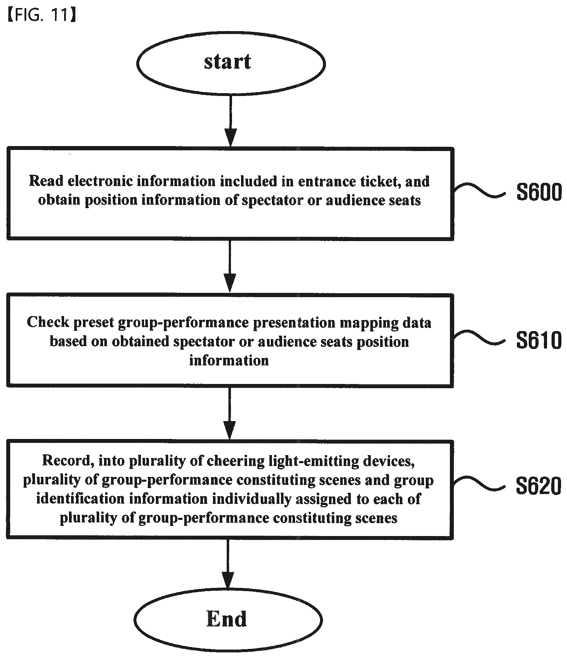

FIG. 11 is a flow chart showing one example of a preliminary group-performance preparation process performed by the information processing device 300 in a method of controlling group-performance in a sports or performance venue according to one embodiment of the present disclosure.

Referring to FIG. 11, the information processing device 300 may read electronic information (e.g., seat information of spectator or audience seats) included in an entrance ticket, and then acquire position information of the spectator or audience seats S600. The information processing device 300 may check the group-performance presentation mapping data pre-configured for the corresponding individual seat position based on the obtained spectator or audience seats position information S610.

The information processing device 300 may record the plurality of group-performance constituting scenes, and the group identification information, as independently assigned to each of a plurality of group-performance constituting scenes based on the group-performance presentation mapping data into the first-cheering light-emitting devices among the plurality of cheering light-emitting devices 200 S620. In this connection, the group identification information may be configured to group, into the same group, some of the plurality of cheering light-emitting devices 200 rendering the same color corresponding to an image to be presented on the spectator or audience seats for each of the plurality of group-performance constituting scenes. That is, the group identification information of the first cheering light-emitting devices 200 includes mapping between identification information related to the plurality of different group-performance constituting scenes, and the group to which the first cheering light-emitting devices 200 belongs.

In one embodiment, some of the plurality of cheering light-emitting devices 200 may have the same group identification information. Further, the same group identification information may be assigned to the cheering light-emitting devices 200 that render the same light-emission state (color) corresponding to each of multiple group-performance constituting scenes. The plurality of cheering light-emitting devices 200 having the same group identification information may vary between the plurality of group-performance constituting scenes. For example, in the first group-performance constituting scene, the first group identification information may be assigned to the cheering light-emitting devices 200 that render the first light-emission state, while, the second group identification information may be assigned to the light-emitting devices 200 that renders the second light-emission state. Further, the cheering light-emitting devices 200 belonging to the first group in the first group-performance constituting scene, and the cheering light-emitting devices 200 belonging to the first group in the second group-performance constituting scene may be different from each other.

The cheering light-emitting devices 200 recording therein the plurality of group-performance constituting scenes and the group identification information independently assigned to each of the plurality of group-performance constituting scenes may be distributed in a corresponding manner with the spectator or audience seats position information. For example, the audience having the operations S600 to S620 completed may carry the cheering light-emitting devices 200 recording therein the group identification information corresponding to each of a plurality of group-performance constituting scenes and corresponding to the spectator or audience seats position information of the corresponding cheering light-emitting devices 200, and the may enter the performance venue and then may occupy the corresponding spectator or audience seats. According to one embodiment, the cheering light-emitting devices 200 may be pre-issued and pre-distributed to the audiences in a state in which the operations S600 to S620 have been completed.

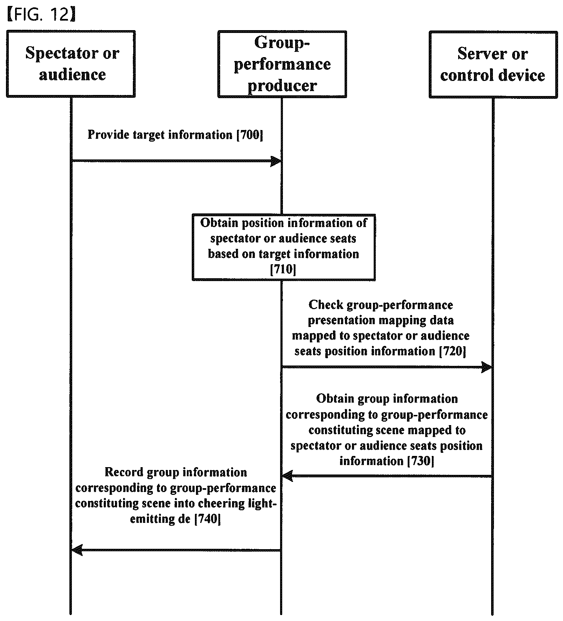

FIG. 12 is a flow chart illustrating another example of a preliminary group-performance preparation process performed by the information processing device 300 in a method for controlling group-performance in a sports or performance venue according to one embodiment of the present disclosure.

In one embodiment of the present disclosure, a spectator or audience for viewing a specific performance may carry each cheering light-emitting device 200 as pre-purchased or pre-distributed together with the pre-issued paper-based or electronic-based entrance ticket and then may reach the performance venue. In the group-performance venue, the group-performance producer may provide information for the presentation of the group-performance constituting scene on the sports or performance venue seat to the cheering light-emitting devices 200 owned by the spectators or audiences via the information processing device 300 .

Referring to FIG. 12, the spectator or audience may provide a pre-issued entrance ticket to the group-performance producer S700.

In one embodiment, the spectator or audience may provide the group-performance producer with the ticket that includes electronic code information such as bar codes, QR codes, etc., issued via a smart device or a code printed on the paper. In this connection, the electronic code information may be embodied as the seat information of the sports or performance venue, which may be the seat numbers on which the spectator or audience seats during the performance.

The performance producer may acquire the spectator or audience seats position information by recognizing the electronic code information included in the ticket via the information processing device 300 S710.

In one embodiment, the group-performance producer recognizes ticket information via the information acquisition module 310 of the information processing device 300, such as a device such as an optical scanner or kiosk, which may recognize electronic code information, and, thus, obtains the spectator or audience seats position information. In this connection, the spectator or audience seats position information refers to information corresponding to the seat numbers of the spectator or audiences to be seated in the performance or sport game. The spectator or audience seats position information may be used as information for identifying the position of the cheering light-emitting devices 200. In other words, the cheering light-emitting devices 200 are mapped, in a 1:1 manner, to the spectator or audience seats. Thus, the spectator or audience seat position information may be obtained from the ticket information of the spectator or audience.

The group-performance producer may check, the group information corresponding to each group-performance constituting scene and mapped to the spectator or audience seats position information, from the group-performance presentation mapping data pre-configured based on the corresponding group-performance time table via the information processing device 300 S720.

In one embodiment, the group-performance producer may access a database of an external server or the control device 100 that pre-stores the group-performance presentation mapping data corresponding to the corresponding group-performance time table via the information processing module 320 of the information processing device 300. Then, the group-performance producer may provide the spectator or audience seats position information obtained from the ticket information to the database of an external server or the control device 100. Then, the group-performance producer may check the group-performance presentation mapping data corresponding to the group-performance timetable and pre-mapped to the corresponding position, based on the provided spectator or audience seats position information.

The group performance producer may acquire the group information corresponding to each group-performance constituting scene and pre-mapped to the spectator or audience seats position information via the information processing device 300 S730.

In one embodiment, the group-performance producer may receive the group-performance constituting scene pre-mapped to the spectator or audience seats position information and the corresponding group information from the database or control device 100 of the external server via the information processing module 320 of the information processing device 300.

The group-performance producer may record the group-performance constituting scene information corresponding to the corresponding group-performance time table and pre-mapped to the spectator or audience seats position information and the corresponding group information, via the information processing device 300, into the cheering light-emitting devices 200 S740.

In one embodiment, the group-performance producer may tag the cheering light-emitting devices 200 from the spectator or audiences via the information recording module 330 of the information processing device 300 including a device such an RF tag device, an NFC input device, an IR (infrared ray) device. Thus, the group-performance producer may provide the cheering light-emitting devices 200 with the group-performance constituting scene information corresponding to the group-performance time table and the group information corresponding to the group-performance constituting scene.

The spectator or audience may carry the cheering light-emitting devices 200 that include the information recorded in operation S740, enter the sports or performance venue, and may occupy the spectator or audience seats corresponding to the ticket information.

FIG. 13 is an illustration of one example of a group-performance scene presented from the spectator or audience seats of a sports or performance venue according to one embodiment of the present disclosure.

In one embodiment, the control device 100 may pre-configure the group-performance scene to be presented from the spectator or audience seats using the cheering light-emitting devices 200 based on the position information of the spectator or audience seats. In this connection, the device 100 may configure multiple group-performance scenes according to an target image to be presented during the arts performance or sports game. FIG. 13 shows an example of a single group-performance scene 500 (hereinafter, first group-performance scene) among the plurality of group-performance-scenes. The first group-performance scene 500 may be configured to have a specific text 501 ("BIGBANG IS VIP") as displayed from the circularly arranged spectator or audience seats, and to have a specific figure 502 displayed from the middle region of the spectator or audience seats. The control device 100 groups, into a single group, the cheering light-emitting devices 200 configured to have the same light-emission state information (e.g., color information) based on the first group-performance scene 500. In this way, the multiple groups may be defined for the first group-performance scene 500. For example, each character included in the specific text "BIGBANG IS VIP" 501 corresponds to a single group. The specific shape 502 may be configured to corresponding to a single group. In this connection, each group may include a plurality of cheering light-emitting devices 200 positioned in the spectator or audience seats for representing corresponding characters or graphics. That is, the control device 100 may consider the presentation pattern (e.g., color information) for the first group-performance scene 500, and the position information of the spectator or audience seats, and, then, may group the cheering light-emitting devices 200 into first to n-th groups.

The cheering light-emitting devices 200 may be mapped, in a 1:1 manner, to the spectators or audience seats of a sports or performance venue. The cheering light-emitting devices 200 may pre-store the group information corresponding to each group-performance scene based on the position information of the spectator or audience seats before the art performance or sports games. For example, the first cheering light-emitting device 510 may be configured to belong to the first group for the first group-performance scene 500 based on the spectator or audience seats position information thereof.

When the arts performance or sports games progresses, the control device 100 may create the control signal based on the group information corresponding to the group-performance scene, and broadcast the control signal via wireless communication. For example, when the present system is presenting the first group-performance scene 500 during the arts performance or sports game, the control device 100 may generate and broadcast a control signal including the light-emission state information (e.g., color information) for each of the first group to the n-th group set for the first group-performance scene 500. In this connection, the control device may control the light-emission state corresponding to each group in real time or change the group-performance scene dynamically with considering the mood of the group-performance venue or the presentation effect. For example, the control device 100 may change the red color pre-set for the first group to the green color in the venue in real time and sends out the control signal corresponding to the change. Thus, the control device 100 may control the light-emission state of the cheering light-emitting devices 200 belonging to the first group. Alternatively, the control device 100 may transmit the control signal having the same color information for the adjacent first and second groups, instead of the color information pre-set for each of the adjacent first and second groups. Thus, the control device 100 may dynamically modify an outline of a shape presented by the first group and the second group.

When the cheering light-emitting devices 200 may receive, from the control device 100, the control signal including the light-emission state information (e.g., color information) corresponding to each group for the first group-performance scene 500, the cheering light-emitting devices 200 may check the group identification information for the first group-performance scene 500 pre-stored in the cheering light-emitting devices 200 and may operate according to the light-emission state information (e.g., color information) corresponding to the checked group identification information. For example, since before the performance, the group identification information is assigned to the first cheering light-emitting device 510 to indicate that the first cheering light-emitting device 510 belongs to the first group for the first group-performance scene 500, the first cheering light-emitting device 510 may operate based on the light-emission state information (e.g., color information upon receiving the control signal for the first group-performance scene 500 from the control device 100.

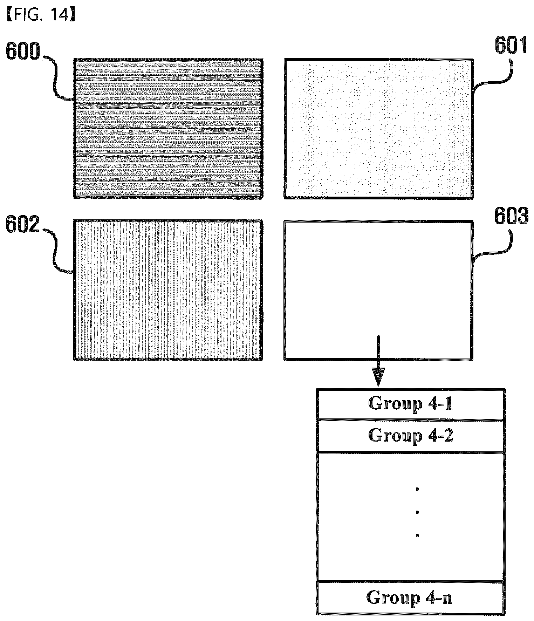

FIG. 14 illustrates group information about group-performance scenes presented from a spectator or audience seats of a sports or performance venue according to one embodiment of the present disclosure.

Each group-performance scene according to one embodiment of the present disclosure may be grouped into a plurality of groups. Each scene group may be configured to include scene group identification information and light-emission state information (e.g., color information) corresponding to the scene group identification information. For the sake of simplicity, Figure 14 shows only some groups among the group-performance scenes grouping into a first group to n-th group. In this embodiment, the spectator or audience seats are grouped into a specific group based on a specific arrangement. For example, each of the first group to the fourth group 600 to 603 is configured as an M x N arrangement of the spectator or audience seats. In this case, the first group to fourth group 600 to 603 may render different colors. Alternatively, the first group to fourth group 600 to 603 may render the same color. Further, one group may be divided into subgroups. For example, the fourth group 603 may include subgroups 4-1 to 4-n. In this connection, each subgroup may be composed of a 1 x N arrangement. When such subgroups are defined, this can also allow one group to display various presentations, such as gradation, surfing, sequential turning-on and off, etc.

According to one embodiment of the present disclosure as described above, each group-performance scene may be presented by segmenting the seats in a specific arrangement. This may allow changing or modifying the group-performance scene in real time during group-performance. Therefore, for performances in which the mood of the venue, the interaction with the audience, and the dynamic presentation effect are important, to pre-configure the presentation data from the seats via grouping using the specific arrangement may be effective.

The operations of the method or algorithm illustrated in connection with the embodiments of the present disclosure may be embodied in hardware, in a software module executed by hardware, or embodied by a combination thereof. The software module may reside in any form of a computer-readable recording medium including a RAM (random access memory), a ROM (read only memory), an EPROM (erasable programmable ROM), an EEPROM (electrically erasable programmable ROM), a flash memory, a hard disk, a removable disk, a CD-ROM, etc.

## Claims

1. A method for controlling seats-based group-performance in a sports or performance venue using a plurality of cheering light-emitting devices, the method **characterized in** comprising:
grouping, by an information processing device (300), the plurality of cheering light-emitting devices (200) corresponding to individual spectator or audience seats of the sports or performance venue such that cheering light-emitting devices rendering the same color for a specific group-performance presentation period belong to the same group, and assigning, by the information processing device (300) group identification information to the plurality of the cheering light-emitting devices; and
recording, by an information recording module (320) of the information processing device (300), the group identification information corresponding to spectator or audience seats position information obtained based on ticket information into the plurality of cheering light-emitting devices,
wherein the plurality of cheering light-emitting devices corresponding to individual spectator or audience seats of the sports or performance venue are selectively turned on or off, thereby to present an image from the spectator or audience seats of the sports or performance venue for a specific group-performance presentation period,
**characterized in that** the information processing device (300) is carried by the spectator or audience together with a ticket and cheering light-emitting device (200) who enters the venue.

2. The method of claim 1, wherein the method further comprises:
creating, by a control device (100), group-performance presentation mapping data including mapping between the group identification information and group light-emission color information rendered from the group corresponding to the group identification information for the specific group-performance presentation period; and
during sports or performance processes, wirelessly broadcasting, by the control device, the group-performance presentation mapping data corresponding to the specific group-performance presentation period across the sports or performance venue.

3. The method of claim 1, wherein the method further comprises:
creating, by a control device (100), group-performance presentation mapping data including mapping between the group identification information and group light emission color information rendered from the group corresponding to the group identification information for the specific group-performance presentation period; and
turning on or off, by the control device (100) the plurality of cheering light emitting devices based on the group light-emission color information corresponding to the group identification information contained in the group-performance presentation mapping data, thereby to present the image from the seats in the sports or performance venue.

4. A system for controlling seats-based group-performance in a sports or performance venue using a plurality of cheering light-emitting devices, the system **characterized in** comprising:
an information processing device (300) configured to group the plurality of cheering light-emitting devices corresponding to individual spectator or audience seats of the sports or performance venue such that cheering light-emitting devices rendering the same color for a specific group-performance presentation period belong to the same group, and to assign group identification information to the plurality of the cheering light-emitting devices; and
the information processing device comprising a information recording module configured to record the group identification information corresponding to spectator or audience seats position information obtained based on ticket information into the plurality of cheering light-emitting devices,
wherein the plurality of cheering light-emitting devices corresponding to individual spectator or audience seats of the sports or performance venue are selectively turned on or off, thereby to present an image from the spectator or audience seats of the sports or performance venue for a specific group-performance presentation period,
**characterized in that** the information processing device (300) is configured as a portable device to be used by the spectator or audience together with a ticket and cheering light-emitting device (200) when entering the venue.

5. The system of claim 4, wherein the system further comprises a control device (100) configured to wirelessly broadcast group-performance presentation mapping data corresponding to the specific group-performance presentation period across the sports or performance venue,
wherein the control device is configured to selectively turn on or off the plurality of cheering light-emitting devices, based on group light-emission color information corresponding to the group identification information recorded in each of the group-performance presentation mapping data received by the plurality of cheering light-emitting devices, thereby to present an image from the spectator or audience seats of the sports or performance venue for the specific group-performance presentation period.

## Patentansprüche

1. Verfahren zum Steuern einer sitzbasierten Gruppendarbietung in einer Sport- oder Veranstaltungslokalität unter Verwendung einer Vielzahl von lichtemittierenden Jubeleinrichtungen, wobei das Verfahren **dadurch gekennzeichnet ist, dass** es umfasst, dass:
die Vielzahl von lichtemittierenden Jubeleinrichtungen (200), die einzelnen Zuschauer- oder Zuhörersitzen der Sport- oder Veranstaltungslokalität entsprechen, durch eine Informationsverarbeitungseinrichtung (300) derart gruppiert wird, dass lichtemittierende Jubeleinrichtungen, die dieselbe Farbe für eine spezifische Gruppendarbietungs-Präsentationsperiode ausgeben, zu derselben Gruppe gehören, und der Vielzahl der lichtemittierenden Jubeleinrichtungen durch die Informationsverarbeitungseinrichtung (300) eine Gruppenidentifikationsinformation zugewiesen wird; und
die Gruppenidentifikationsinformation, die einer Zuschauer- oder Zuhörersitzpositionsinformation entspricht, die basierend auf einer Ticketinformation erhalten wird, durch ein Informationsaufzeichnungsmodul (320) der Informationsverarbeitungseinrichtung (300) in der Vielzahl von lichtemittierenden Jubeleinrichtungen aufgezeichnet wird,
wobei die Vielzahl von lichtemittierenden Jubeleinrichtungen, die einzelnen Zuschauer- oder Zuhörersitzen der Sport- oder Veranstaltungslokalität entsprechen, selektiv ein- oder ausgeschaltet wird, um dadurch ein Bild von den Zuschauer- oder Zuhörersitzen der Sport- oder Veranstaltungslokalität für eine spezifische Gruppendarbietungs-Präsentationsperiode zu präsentieren,
**dadurch gekennzeichnet, dass** die Informationsverarbeitungseinrichtung (300) durch den Zuschauer oder Zuhörer, der die Lokalität betritt, zusammen mit einem Ticket und einer lichtemittierenden Jubeleinrichtung (200) mitgeführt wird.

2. Verfahren nach Anspruch 1, wobei das Verfahren ferner umfasst, dass:
durch eine Steuereinrichtung (100) Gruppendarbietungspräsentations-Zuordnungsdaten erzeugt werden, die eine Zuordnung zwischen der Gruppenidentifikationsinformation und einer Gruppenlichtemissions-Farbinformation, die von der Gruppe entsprechend der Gruppenidentifikationsinformation für die spezifische Gruppendarbietungs-Präsentationsperiode ausgegeben wird, umfassen; und
während Sport- oder Veranstaltungsabläufen durch die Steuereinrichtung die Gruppendarbietungspräsentations-Zuordnungsdaten, die der spezifischen Gruppendarbietungs-Präsentationsperiode entsprechen, drahtlos über die Sport- oder Veranstaltungslokalität rundgesendet werden.

3. Verfahren nach Anspruch 1, wobei das Verfahren ferner umfasst, dass:
durch eine Steuereinrichtung (100) Gruppendarbietungspräsentations-Zuordnungsdaten erzeugt werden, die eine Zuordnung zwischen der Gruppenidentifikationsinformation und einer Gruppenlichtemissions-Farbinformation, die von der Gruppe entsprechend der Gruppenidentifikationsinformation für die spezifische Gruppendarbietungs-Präsentationsperiode ausgegeben wird, umfassen; und
durch die Steuereinrichtung (100) die Vielzahl von lichtemittierenden Jubeleinrichtungen basierend auf der Gruppenlichtemissions-Farbinformation, die der Gruppenidentifikationsinformation entspricht, die in den Gruppendarbietungspräsentations-Zuordnungsdaten enthalten ist, ein- oder ausgeschaltet wird, um dadurch das Bild von den Sitzen in der Sport- oder Veranstaltungslokalität zu präsentieren.

4. System zum Steuern einer sitzbasierten Gruppendarbietung in einer Sport- oder Veranstaltungslokalität unter Verwendung einer Vielzahl von lichtemittierenden Jubeleinrichtungen, wobei das System **dadurch gekennzeichnet ist, dass** es umfasst:
eine Informationsverarbeitungseinrichtung (300), die ausgestaltet ist, um die Vielzahl von lichtemittierenden Jubeleinrichtungen, die einzelnen Zuschauer- oder Zuhörersitzen der Sport- oder Veranstaltungslokalität entsprechen, derart zu gruppieren, dass lichtemittierende Jubeleinrichtungen,
die dieselbe Farbe für eine spezifische Gruppendarbietungs-Präsentationsperiode ausgeben, zu derselben Gruppe gehören, und der Vielzahl der lichtemittierenden Jubeleinrichtungen eine Gruppenidentifikationsinformation zuzuweisen; und
wobei die Informationsverarbeitungseinrichtung ein Informationsaufzeichnungsmodul umfasst, das ausgestaltet ist, um die Gruppenidentifikationsinformation, die einer Zuschauer- oder Zuhörersitzpositionsinformation entspricht, die basierend auf einer Ticketinformation erhalten wird, in der Vielzahl von lichtemittierenden Jubeleinrichtungen aufzuzeichnen,
wobei die Vielzahl von lichtemittierenden Jubeleinrichtungen, die einzelnen Zuschauer- oder Zuhörersitzen der Sport- oder Veranstaltungslokalität entsprechen, selektiv ein- oder ausgeschaltet wird, um dadurch ein Bild von den Zuschauer- oder Zuhörersitzen der Sport- oder Veranstaltungslokalität für eine spezifische Gruppendarbietungs-Präsentationsperiode zu präsentieren,
**dadurch gekennzeichnet, dass** die Informationsverarbeitungseinrichtung (300) als eine tragbare Einrichtung ausgestaltet ist, die durch den Zuschauer oder Zuhörer beim Betreten der Lokalität zusammen mit einem Ticket und einer lichtemittierenden Jubeleinrichtung (200) zu verwenden ist.

5. System nach Anspruch 4, wobei das System ferner eine Steuereinrichtung (100) umfasst, die ausgestaltet ist, um Gruppendarbietungspräsentations-Zuordnungsdaten, die der spezifischen Gruppendarbietungs-Präsentationsperiode entsprechen, drahtlos über die Sport- oder Veranstaltungslokalität rundzusenden,
wobei die Steuereinrichtung ausgestaltet ist, um die Vielzahl von lichtemittierenden Jubeleinrichtungen basierend auf einer Gruppenlichtemissions-Farbinformation, die der Gruppenidentifikationsinformation entspricht, die in allen Gruppendarbietungspräsentations-Zuordnungsdaten aufgezeichnet ist, die durch die Vielzahl von lichtemittierenden Jubeleinrichtungen empfangen werden, selektiv ein- oder auszuschalten, um dadurch ein Bild von den Zuschauer- oder Zuhörersitzen der Sport- oder Veranstaltungslokalität für die spezifische Gruppendarbietungs-Präsentationsperiode zu präsentieren.

## Revendications

1. Procédé de commande d'une performance de groupe basée sur des sièges dans une salle de sport ou de spectacle à l'aide d'une pluralité de dispositifs émetteurs de lumière d'encouragement, le procédé étant **caractérisé en ce qu'**il comprend les étapes consistant à :
regrouper, via un dispositif de traitement d'informations (300), la pluralité de dispositifs émetteurs de lumière d'encouragement (200) correspondant à des sièges individuels d'un spectateur ou d'un public de la salle de sport ou de spectacle de telle sorte que des dispositifs émetteurs de lumière d'encouragement rendant la même couleur pendant une période de présentation de performance de groupe spécifique appartiennent au même groupe, et attribuer, via le dispositif de traitement d'informations (300), des informations d'identification de groupe à la pluralité de dispositifs émetteurs de lumière d'encouragement ; et
enregistrer, via un module d'enregistrement d'informations (320) du dispositif de traitement d'informations (300), les informations d'identification de groupe correspondant à des informations de positions de sièges d'un spectateur ou d'un public obtenues sur la base d'informations de billets, dans la pluralité de dispositifs émetteurs de lumière d'encouragement,
dans lequel la pluralité de dispositifs émetteurs de lumière d'encouragement correspondant à des sièges individuels d'un spectateur ou d'un public de la salle de sport ou de spectacle sont activés ou désactivés sélectivement, présentant ainsi une image provenant des sièges individuels du spectateur ou du public de la salle de sport ou de spectacle pendant une période de présentation de performance de groupe spécifique,
**caractérisé en ce que** le dispositif de traitement d'informations (300) est exécuté par le spectateur ou le public, conjointement avec un billet et un dispositif émetteur de lumière d'encouragement (200), à l'entrée dans la salle.

2. Procédé selon la revendication 1, dans lequel le procédé comprend en outre les étapes consistant à :
créer, via un dispositif de commande (100), des données de mappage de présentation de performance de groupe incluant un mappage entre les informations d'identification de groupe et les informations de couleur d'émission de lumière de groupe rendues depuis le groupe correspondant aux informations d'identification de groupe pendant la période de présentation de spectacles de groupe spécifique ; et
pendant des processus de sport ou de spectacle, diffuser de manière non filaire, via le dispositif de commande, les données de mappage de présentation de performance de groupe correspondant à la période de présentation de performance de groupe spécifique à travers la salle de sport ou de spectacle.

3. Procédé selon la revendication 1, dans lequel le procédé comprend en outre les étapes consistant à :
créer, via un dispositif de commande (100), des données de mappage de présentation de performance de groupe incluant un mappage entre les informations d'identification de groupe et les informations de couleur d'émission de lumière de groupe rendues depuis le groupe correspondant aux informations d'identification de groupe pendant la période de présentation de performance de groupe spécifique ; et
activer ou désactiver, via le dispositif de commande (100), la pluralité de dispositifs émetteurs de lumière d'encouragement sur la base des informations de couleur d'émission de lumière de groupe correspondant aux informations d'identification de groupe contenues dans les données de mappage de présentation de performance de groupe, présentant ainsi l'image provenant des sièges dans la salle de sport ou de spectacle.

4. Système de commande d'une performance de groupe basée sur des sièges dans une salle de sport ou de spectacle à l'aide d'une pluralité de dispositifs émetteurs de lumière d'encouragement, le système étant **caractérisé en ce qu'**il comprend :
un dispositif de traitement d'informations (300) configuré pour regrouper la pluralité de dispositifs émetteurs de lumière d'encouragement correspondant à des sièges individuels d'un spectateur ou d'un public de la salle de sport ou de spectacle de telle sorte que des dispositifs émetteurs de lumière d'encouragement rendant la même couleur pendant une période de présentation de performance de groupe spécifique appartiennent au même groupe, et pour attribuer des informations d'identification de groupe à la pluralité de dispositifs émetteurs de lumière d'encouragement ; et
le dispositif de traitement d'informations comprenant un module d'enregistrement d'informations configuré pour enregistrer les informations d'identification de groupe correspondant à des informations de positions de sièges de spectateurs ou d'un public obtenues sur la base d'informations de billets, dans la pluralité de dispositifs émetteurs de lumière d'encouragement,
dans lequel la pluralité de dispositifs émetteurs de lumière d'encouragement correspondant à des sièges individuels d'un spectateur ou d'un public de la salle de sport ou de spectacle sont activés ou désactivés sélectivement, présentant ainsi une image provenant des sièges du spectateur ou du public de la salle de sport ou de spectacle pendant une période de présentation de performance de groupe spécifique,
**caractérisé en ce que** le dispositif de traitement d'informations (300) est configuré comme dispositif portable devant être utilisé par le spectateur ou le public, conjointement avec un billet et un dispositif émetteur de lumière d'encouragement (200), à l'entrée dans la salle.

5. Système selon la revendication 4, dans lequel le système comprend en outre un dispositif de commande (100) configuré pour diffuser de manière non filaire des données de mappage de présentation de performance de groupe correspondant à la période de présentation de performance de groupe spécifique à travers la salle de sport ou de spectacle,
dans lequel le dispositif de commande est configuré pour activer ou désactiver sélectivement la pluralité de dispositifs émetteurs de lumière d'encouragement, sur la base d'informations de couleur d'émission de lumière de groupe correspondant aux informations d'identification de groupe enregistrées dans chacune des données de mappage de présentation de performance de groupe reçues par la pluralité de dispositifs émetteurs de lumière d'encouragement, présentant ainsi une image provenant des sièges du spectateur ou du public de la salle de sport ou de spectacle pendant la période de présentation de performance de groupe spécifique.
